Europäisches Patentamt

(19) European Patent Office

Office européen des brevets

(11) **EP 1 062 746 B1**

(12) **EUROPEAN PATENT SPECIFICATION**

(45) Date of publication and mention
of the grant of the patent:
**24.03.2004   Bulletin 2004/13**

(51) Int Cl.$^7$: **H04B 7/04**, H01Q 3/26

(86) International application number:
**PCT/US1998/019299**

(21) Application number: **98948276.5**

(22) Date of filing: **15.09.1998**

(87) International publication number:
**WO 1999/014870 (25.03.1999 Gazette 1999/12)**

(54) **PRACTICAL SPACE-TIME RADIO METHOD FOR CDMA COMMUNICATION CAPACITY ENHANCEMENT**

PRAKTISCHES RAUM-ZEIT-FUNKÜBERTRAGUNGSVERFAHREN ZUR VERBESSERUNG DER CDMA-ÜBERTRAGUNGSKAPAZITÄT

PROCEDE SPATIO-TEMPOREL PRATIQUE DE RADIOCOMMUNICATION PERMETTANT D'AUGMENTER DE LA CAPACITE DE COMMUNICATION AMCR

(84) Designated Contracting States:
**AT BE CH DE DK ES FI FR GB GR IE IT LI NL SE**

(30) Priority: **15.09.1997   US 929638**
**13.01.1998   US 71473 P**
**13.03.1998   US 77979 P**
**17.07.1998   US 93150 P**
**20.08.1998   US 97340 P**

(43) Date of publication of application:
**27.12.2000   Bulletin 2000/52**

(73) Proprietor: **Kathrein-Werke KG**
**83022 Rosenheim (DE)**

(72) Inventor: **SCHERZER, Shimon, B.**
**Sunnyvale, CA 94087 (US)**

(74) Representative: **Flach, Dieter Dipl.-Phys. et al**
**Andrae Flach Haug**
**Adlzreiterstrasse 11**
**83022 Rosenheim (DE)**

(56) References cited:
**WO-A-96/23329         US-A- 5 260 968**
**US-A- 5 309 474         US-A- 5 546 090**
**US-A- 5 592 490**

- **CHOI J: "Beamforming for the multiuser detection with decorrelator in synchronous CDMA systems: Approaches and performance analysis" SIGNAL PROCESSING EUROPEAN JOURNAL DEVOTED TO THE METHODS AND APPLICATIONS OF SIGNAL PROCESSING, vol. 60, no. 2, July 1997, page 195-211 XP004088032**

**Description**

BACKGROUND

Field of the invention

The present invention relates to wireless communication systems. More specifically, the invention relates to methods for enhancement of wireless communication performance by exploiting the spatial domain, and practical systems for implementing such methods.

Related Art

Due to the increasing demand for wireless communication, it has become necessary to develop techniques for more efficiently using the allocated frequency bands, i.e., increasing the capacity to communicate information within a limited available bandwidth. In conventional low capacity wireless communication systems, information is transmitted from a base station to subscribers by broadcasting omnidirectional signals on one of several predetermined frequency channels. Similarly, the subscribers transmit information back to the base station by broadcasting similar signals on one of the frequency channels. In this system, multiple users independently access the system through the division of the frequency band into distinct sub-band frequency channels. This technique is known as frequency division multiple access (FDMA).

A standard technique used by commercial wireless phone systems for increasing capacity is to divide the service region into spatial cells. Instead of using just one base station to serve all users in the region, a collection of base stations is used to independently service separate spatial cells. In such a cellular system, multiple users can reuse the same frequency channel without interfering with each other, provided the users access the system from different spatial cells. The cellular concept, therefore, is a simple type of spatial division multiple access (SDMA).

In the case of digital communication, additional techniques can be used to increase capacity. A few well-known examples are time division multiple access (TDMA) and code division multiple access (CDMA). TDMA allows several users to share a single frequency channel by assigning their data to distinct time slots. CDMA is normally a spread-spectrum technique that does not limit individual signals to narrow frequency channels but spreads the signals throughout the frequency spectrum of the entire band. Signals sharing the band are distinguished by assigning different orthogonal digital code sequences or spreading signals to each signal. CDMA has been considered the most promising method among the various air-interfaces in the industry, as shown by theoretical analysis (See, for example, Andrew J. Viterbi, *CDMA Principles of Spread Spectrum Communications,* and Vijay K. Garg et al., *Applications of CDMA in Wireless/Personal Communications.*

Despite the promise of CDMA, practical issues such as power control speed and inter-base station interference considerably limited system effectiveness in the initial phase of CDMA implementation. CDMA-based system capacity depends very much on the ability to provide for very accurate power control, but in a mobile environment, the signal may fluctuate too fast for the system to control. Unfortunately, mobile wireless environments are often characterized by unstable signal propagation, severe signal attenuation between the communicating entities, and co-channel interference by other radio sources. Moreover, many urban environments contain a significant number of reflectors (such as buildings), causing a signal to follow multiple paths from the transmitter to the receiver. Because the separate parts of such a multipath signal can arrive with different phases that destructively interfere, multipath can result in unpredictable signal fading. Furthermore, fast fading, which is created by the combination of multipath components of a signal being reflected from various elements ("scatterers") in the neighborhood ("scattering zone") of a moving transmitter with random phases, is considered to be a major issue in wireless communication. The destructive combining at the receiving antenna produces time varying signal levels with a power density function characterized by a Rayleigh distribution. Thus, the received power experiences "deeps" or nulls at various times that can cause significant errors in the transmitted information (characterized by "burst bit errors" in digital communication). In addition to fading, inter-base station interference can cause significant system performance degradation when radiated power is increased in order to provide service to shadowed areas.

Modern communication systems reduce the fading effects by interleaving the transmitted data and deinterleaving the received data, with the addition of proper error correction techniques. In addition, utilizing spatial diversity is a very common method for mitigating fading, e.g., a signal received at two sufficiently spaced antennas (10 wavelengths or more) has a small correlation in the received power vs. time (power/time) function. Hence, most point-to-multipoint communication systems utilize spatial diversity combining to reduce fading effects. In most cases, the receiver either selects the antenna with the stronger signal power ("switching diversity") or combines two antenna outputs after compensating for the phase and amplitude difference ("maximum ratio combining").

Spread spectrum direct sequence systems (such as IS-95) provide for additional fading mitigation by time diversity, i.e., multipath can be separated by time due to signal bandwidth and its associated auto-correlation function. If multipath components arrive with sufficient time spacing, their power/time functions are not correlated. In IS-95, the RAKE receiver provides for a plurality of demodulators ("fingers"), each assigned to a different time of signal arrival. Typically, the number of demodulating channels is four at the base station. If the arriving signal multipath has significant delay spread (e.g., several microseconds), the system can successfully assign different "fingers" to the incoming multipath components and provide for excellent fading mitigation. In most cases, however, the delay spread is not sufficient to provide for time diversity (especially in suburban areas), and the majority of fading mitigation is still provided by spatial diversity and coding. Since current base stations employ only two antennas per sector, only two "fingers" are usually active.

Recently, considerable attention has focused on ways to increase wireless system performance by further exploiting the spatial domain. It is well recognized that SDMA techniques, in principle, could significantly improve the CDMA-based network performance. These techniques have varying degrees of sophistication and complexity. Currently proposed approaches are either simple but not very effective or effective but too complex for practical implementation.

One well-known SDMA technique is to provide the base station with a set of independently controlled directional antennas, thereby dividing the cell into separate sectors, each controlled by a separate antenna. As a result, the frequency reuse in the system can be increased and/or co-channel interference can be reduced. Instead of independently controlled directional antennas, this technique can also be implemented with a coherently controlled antenna array. Using a signal processor to control the relative phases of the signals applied to the antenna elements, predetermined beams can be formed in the directions of the separate sectors. Similar signal processing can be used to selectively receive signals only from within the distinct sectors. These simple sectoring techniques, however, only provide a relatively small increase in capacity.

U.S. Patent No. 5,563,610 discloses a method for mitigating signal fading due to multipath in a CDMA system. By introducing intentional delays into received signals, non-correlated fading signal components can be better differentiated by the RAKE receiver. Although this diversity method can reduce the effects of fading, it does not take advantage of the spatial domain and does not directly increase system capacity. Moreover, this approach, which combines angular and time diversity using a fixed beam configuration, is not effective since either the beam outputs are significantly different in level or they are similar in level but highly correlated. If two signal parts are arriving from similar direction, they are passing through one beam and thus are non-differentiable. If the signal parts are arriving between beams, on the other hand, the levels are similar, but they are well correlated.

More sophisticated SDMA techniques have been proposed that could dramatically increase system capacity. For example, U.S. Pat. No. 5,471,647 and U.S. Pat. No. 5,634,199, both to Gerlach et al., and U.S. Pat. No. 5,592,490 to Barratt et al. disclose wireless communication systems that increase performance by exploiting the spatial domain. In the downlink, the base station determines the spatial channel of each subscriber and uses this channel information to adaptively control its antenna array to form customized narrow beams. These beams transmit an information signal over multiple paths so that the signal arrives to the subscriber with maximum strength. The beams can also be selected to direct nulls to other subscribers so that co-channel interference is reduced. In the uplink, the base station uses the channel information to spatially filter the received signals so that the uplink signal is received with maximum sensitivity and distinguished from the signals transmitted by other subscribers. Through selective power delivery by intelligent directional beams, the inter-base station interference and the carrier-to-interference (C/I) ratio at the base station receivers can be reduced.

The biggest issue in adaptive beamforming is how to quickly estimate the wireless-air channel to allow for effective beam allocation. In the uplink, there are known signal processing techniques for estimating the spatial channel from the signals received at the base station antenna array. These techniques conventionally involve an inversion or singular value decomposition of a signal covariance matrix. The computational complexity of this calculation, however, is so high that it is presently not practical to implement. These highly complex approaches capitalize on the theory of array signal processing. This approach estimates the uplink channel (e.g., the angles and times of arrival of the multipath signal parts) to create a space-time matched filter to allow for maximum signal delivery. The proposed method involves computation of a signal covariance matrix and derivation of its eigenvectors to determine the array coefficients. The basic problem of array signal processing is formulated in the following expression:

$$X=AS+N$$

where $X$ is a matrix of antenna array signal snapshots (each column incorporates snapshots of all antenna elements), $S$ is the transmitted signal matrix (each column incorporates snapshots of the information signal, $A$ is the antenna array and channel response or array manifold matrix, and $N$ is the noise matrix. The main challenge of array signal processing is to estimate $S$ based on the statistics of $A$ and $S$, that is, to reliably and correctly estimate all the incoming signals with the presence of interference and thermal noise, **N**. This problem has been a subject for extensive research for several years. Two well known estimating algorithms involve Maximum Likelihood Sequence Estimation (MLSE) and Minimum Mean Square Error (MMSE). Using these techniques, if **S** represents signals with known properties, such as constant modules (CM) or finite alphabet (FA), the process can be executed using the temporal structure statistics of the known signal. If the array manifold is known, then convergence can be made faster. This process, however, is very computational intensive. In a base station that is required to simultaneously support more than 100 mobile units, the computation power is presently beyond practical realization.

Most adaptive beam forming methods described in the art (e.g., U.S. Pat. No. 5,434,578) deal extensively with uplink estimation, while requiring extensive computation resources. Few, however, deal with downlink estimation, which is a more difficult problem. Because the spatial channel is frequency dependent and the uplink and downlink frequencies are often different, the uplink beamforming techniques do not provide the base station with sufficient information to derive the downlink spatial channel information and improve system capacity. One technique for obtaining downlink channel information is to use feedback from the subscriber. The required feedback rates, however, make this approach impractical to implement.

An article by J. Choi "Beamforming for the multiuser detection with decorrelator in synchronous CDMA systems: Approaches and performance analaysis", SIGNAL PROCESSING EUROPEAN JOURNAL DEVOTED TO THE METHODS AND APPLICATIONS OF SIGNAL PROCESSING, vol 60, no. 2, July 1997, page 195-211, discloses the steps of receiving uplink signals with an array of antenna elements to yield a set of received signals from a set of mobiles and decorrelating the received user signals to obtain spatial information about the mobiles and spatially filtering subsequent received signals from a mobile unit in accordance with spatial information to extract the user's symbol carried in the signal using a beamforming vector selected by estimation of the angle of arrival of the user's signal on the antenna array.

This is a system for multiuser detection in the temporal domain and teaches that the output of the beamformers is the combination of the decoupled signal vectors with the beamforming vector.

There is a need, therefore, for increasing wireless system capacity using beamforming methods that overcome the limitations discussed above in the known approaches.

SUMMARY OF THE INVENTION

The present invention provides a method for wireless communication that exploits the spatial domain in both uplink and downlink without requiring computationally complex processing. The method provides for significant capacity enhancement in both uplink and downlink while maintaining implementation simplicity. This goal is achieved by eliminating the necessity for covariance matrix processing, using low bit count arithmetic and by capitalizing on signal multipath structures.

A method for wireless communication according to one aspect of the present invention comprises transmitting from a mobile unit a code modulated signal, such as a CDMA signal, which is obtained by modulating original symbols by a predetermined pseudo-noise sequence. The original symbols represent an original information signal. A base station antenna array then receives in parallel N complex-valued signal sequences from N corresponding antenna elements. Each of the N signal sequences are then correlated with the pseudo-noise sequence to de-spread and select N received signals comprising N received symbols corresponding to a common one of the original symbols. The N received symbols are then transformed in parallel to obtain N complex-valued transformer outputs which are then correlated collectively with a set of complex array calibration vectors to obtain spatial information about the signal. Each array calibration vector represents a response of the antenna array to a calibration signal originating in a predetermined direction relative to the base station. The above steps are repeated to obtain spatial information (angle of arrival (AOA), time of arrival (TOA), and distance to the mobile unit) about multiple signal components corresponding to the same mobile unit. This spatial information is then used to spatially filter subsequent complex-valued signal sequences. The filtered signal is then demodulated to obtain a symbol from the original information signal.

The original symbols are selected from a finite symbol alphabet. In a preferred embodiment, the finite alphabet contains not more than 64 symbols and the calibration vectors comprise complex-valued components having 1 or 2-bit-plus-sign real part and 1 or 2-bit-plus-sign imaginary part. The number of bits can be increased if necessary. This simple representation allows computing the correlation via addition without the need for computationally complex multiplications. In one embodiment, the correlating step yields spatial information about multiple signal components from the mobile unit having small time separated signal parts (i.e., having a time spread less than one chip). Another embodiment of the invention includes the step of tracking time and angle information of the multiple signal components. In one embodiment, an analog signal with known amplitude and zero phase (i.e., a "sounding" signal) is inserted into transmission and receive channels of the base station. The signal at each of the channel outputs is then decoded to determine its phase and amplitude. The measured phase and amplitude data are then used to correct the antenna calibration data (array manifold matrix), thereby eliminating phase and amplitude mismatch in a multi-channel receiving and transmitting system, which can be due in part to temperature changes, component degradation, receive and transmit power, etc.

The invention further provides for a spatially filtered downlink information signal in accordance with the spatial information about the multiple signal components that was determined from the uplink. The spatial filtering comprises assigning the mobile unit to a beam based on spatial information about the mobile unit. This spatial information comprises directional and distance information about the mobile unit. The downlink beams are a dynamically adaptive set of overlapping broad and narrow beams such that closer mobile units are assigned to broader beams and more distant mobile units are assigned to narrower beams. The downlink beam width is determined based on uplink signal AOA distribution (collecting many symbols) and if possible, distance. Since normally AOA spread is associated with distance such that the farther the mobile unit the less AOA spread, the AOA spread can be used as mentioned above. The set of beams are modified depending on the statistics of the spatial information of all mobile units served by the base station in order to optimize system performance. In one embodiment, multiple (2 to 4) narrow beams (2 to 3 degrees) are formed in a wide aperture antenna array to cover a scattering zone to minimize the effects of fast (Rayleigh) fading. The wide aperture array allows multiple narrow beams in the same general direction to be constructed with low correlation weight vectors, providing low correlation (approximately 0.7 or less) between the beam outputs within the wide antenna array. The width and orientation of the beams are determined by evaluating the angular spread of the incoming signal, and in particular, by determining the peak and spread or variance of an angle of arrival histogram. In the preferred embodiments, the transmitting of the downlink beams is performed in accordance with beamforming information comprising complex-valued elements having 3-bit-plus-sign real part and 3-bit-plus-sign imaginary part. In the preferred embodiment for CDMA IS-95, downlink traffic beam is assigned to specific mobile units while the overhead beams are maintained as for three or six sector base stations. A small phase is maintained between traffic and pilot beams to prevent degradation of demodulation performance at the mobile station.

In some embodiments, a pilot signal is code multiplexed into the signal transmitted from a mobile unit to the antenna array of the base station for wide-band CDMA communication systems. The base station correlates the pilot signal of the incoming signal with a sequence of delayed pilot signals generated from the base station. These correlation values are spatially correlated with the antenna array manifold matrix to produce a signal angle of arrival (AOA) and time of arrival (TOA) histogram. The resulting histogram is used to determine the "best" AOA and TOA for forming uplink and downlink beams directed to the desired scattering zone. Using a pilot signal, instead of the actual signal itself, for spatial correlation, results in a simpler communication system. In many situations, the AOA histogram can be compiled from a spatial correlation between the array response vector (comprising electrical amplitude and phase of all antenna array elements) and the array manifold matrix. Knowledge of the array manifold is useful due to the relatively small angular spread between signals at longer distances.

The invention also provides a CDMA base station implementing the above method. The station comprises an antenna array having N antenna elements and a set of N receivers coupled to the N antenna elements to produce N incoming signals. The base station also comprises a set of N de-spreaders coupled to the N receivers for producing from the N incoming signals N de-spread signals corresponding to a single mobile unit. A set of N symbol transformers is coupled to the N de-spreaders and produces a complex-valued output from the de-spread signals. A spatial correlator coupled to the N symbol transformers correlates the complex-valued output with stored array calibration data to produce beamforming information for multiple signal parts associated with the mobile unit. In the preferred embodiment, the array calibration data is composed of complex-valued array response elements represented as bit-plus-sign imaginary'parts and bit-plus-sign real parts. A receiving beamformer coupled to the spatial correlator and to the N receivers then spatially filters the N incoming signals in accordance with the beamforming information. A RAKE receiver (or other equivalent receiver) coupled to the receiving beamformer produces an information signal from the spatially filtered signals. In one embodiment, the base station also includes a tracker coupled to the spatial correlator and to the receiving beamformer. The tracker tracks multiple signal parts and optimizes the performance of the receiving beamformer.

In the preferred embodiment, the base station also includes a transmitting beamformer coupled to the spatial correlator. The transmitting beamformer generates spatial beams in accordance with the beam-forming information to increase system capacity. The spatial beams are a dynamically calculated set of downlink beams comprising narrow beams and overlapping broad beams such that the narrow beams are phase matched to the overlapping wide beams. The spatial beams are selected such that more distant mobiles are assigned to narrower beams and closer mobiles are assigned to broader beams.

In one embodiment, the base station comprises a compensation signal source and a compensation detector both coupled between the set of transmitting and receiving beamformers and the set of N transmitters and receivers. The compensation signal source injects a known amplitude, zero phase analog "sounding" signal into the transmission channels while the compensation detector decodes the sounding signal and accumulates measured phase and amplitude data, which are used to correct phase and amplitude mismatch data.

DETAILED DESCRIPTION

Although the following detailed description contains many specifics for the purposes of illustration, anyone of ordinary skill in the art will appreciate that many variations and alterations to the following details are within the scope of the invention. Accordingly, the following preferred embodiment of the invention is set forth without any loss of generality to, and without imposing limitations upon, the claimed invention.

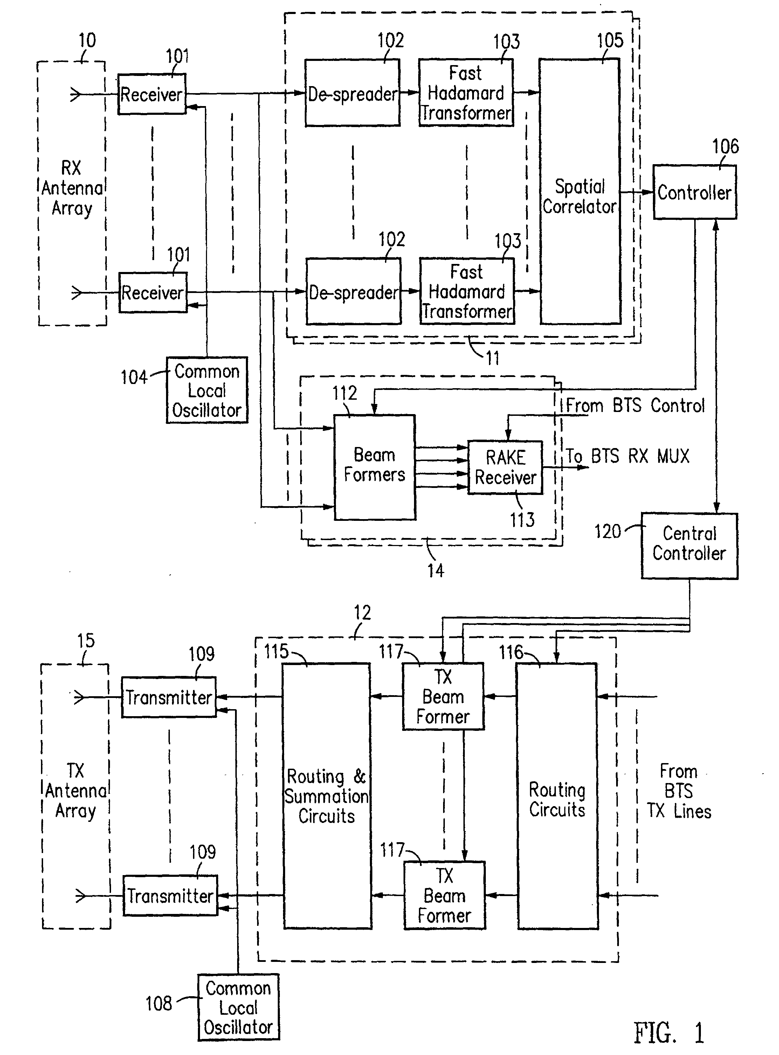

Fig. 1 provides a general view of the system architecture of a base station according to the present invention. The base station comprises a receiving antenna array 10 having N antenna elements. In this embodiment, the system also comprises a separate antenna array 15 for transmission. Using antenna duplexers, however, the arrays can be combined, as is well known in the art. The embodiment allows for low cost duplexers and antenna filters since much less power is required per element to provide the required effective radiated power (BRP) due to beam-forming. Preferably, the number N of antenna elements is approximately 15.

Each of the N antenna elements is coupled to a corresponding one of a set of N conventional receivers 101. Each receiver down-converts an incoming signal in frequency and digitizes the signal to produce a received signal having I and Q (in phase and quadrature) signal components. In this embodiment, the receivers are coherently tuned by a common local oscillator 104 to allow for both phase and amplitude data measurement, thereby producing, at any given instant, an N-dimensional received signal vector having complex-valued components. Alternatively, a calibration signal of fixed frequency can be injected to all receiver channels simultaneously with the received signal, allowing for continuous estimation of the phase and amplitude difference among the receivers. The calibration signal can be differentiated from the received signal since it is not spread and can have a very low level since its integration can be very long. Specific relevant receiver designs are presented in U.S. Pat. No. 5,309,474.

The received signal vector from the N receivers 101 is fed to a set of I. channel estimators 11 and also to a corresponding set of L receiver banks 14. Each channel estimator 11 and corresponding receiver bank 14 is used to estimate the channel and receive the signal. from a single mobile unit. Thus the maximum number of mobile units that can be simultaneously served by the base station is L. In a preferred embodiment, L is at least 100. The estimators 11 are identical to each other in both structure and principles of operation. Similarly, the receiving banks 14 are also identical. Accordingly, the following description is limited to a single estimetor 11 and its corresponding receiver bank 14 which serve to estimate the channel of a single mobile unit and receive its signal.

In the preferred embodiment, channel estimator 11 comprises a set of N de-spreaders 102, a corresponding set of N fast Hadamard transformers (FHTs) and a spatial correlator 105. The de-spreaders 102 are conventional code-correlators described in detail, for example, in U.S. Pat. No. 5,309,747. Each of the N de-spreaders correlates a single component of the received signal vector with a pseudo-noise (FN) code sequence assigned to the associated mobile unit in accordance with the IS-95 CDMA standard. Each code correlator or despreader 102 uses a variable time offset (synchronized with the other code correlators in the same bank) to separate multipath parts that arrive with at least one PN chip period difference. The time offset is determined by repetitive hypothesis, e.g., setting the code time offset and collecting the symbol length of the samples, then executing the process described herein. The result is the CIR buffer (described-later), where the peaks represent the different signal paths' TOAs. The following description discusses the processing of one multipath part. All multipath parts that are strong enough to be isolated are processed identically.

Each despreader 102 outputs a de-spread signal corresponding to one mobile received at one antenna. This de-spread signal is fed into a fast Hadamard transformer (FHT) 103. The FHT used in the present invention is identical to conventional FHTs (described, for example, in U.S. Pat. No. 5,309,474), except that the FHT of the present invention retains the complex phase information of the input. In other words, whereas the standard FHT outputs are converted to magnitudes, the FHT used in the present invention outputs complex numbers, thereby preserving both phase and amplitude data. Each FHT in this embodiment has 64 complex outputs, whose magnitudes represent the degree to which the de-spread signal correlates to each of the 64 symbols in a predetermined symbol alphabet. In the preferred embodiment, the symbol alphabet to a set of 64 orthogonal Walsh symbols.

For a given symbol received at the antenna array 10 (in IS-95, a symbol period is approximately 208 microseconds), the signals received at the N antenna elements are, separately and in parallel, passed through N respective receivers 101, de-spreaders 102, and FHTs 103, while retaining the relative phase information of the signals. The collection of N FHTs 103 together produce an N x 64 signal matrix B of complex elements. Each colume of B is an N-dimensional vector, called the spatial response vector, whose N components represent the correlation of one Walsh symbol with the signal received at the N antenna elements. The matrix B is fed column-by-column to the spatial correlator 105 following timing synchronized to the Walsh symbols.

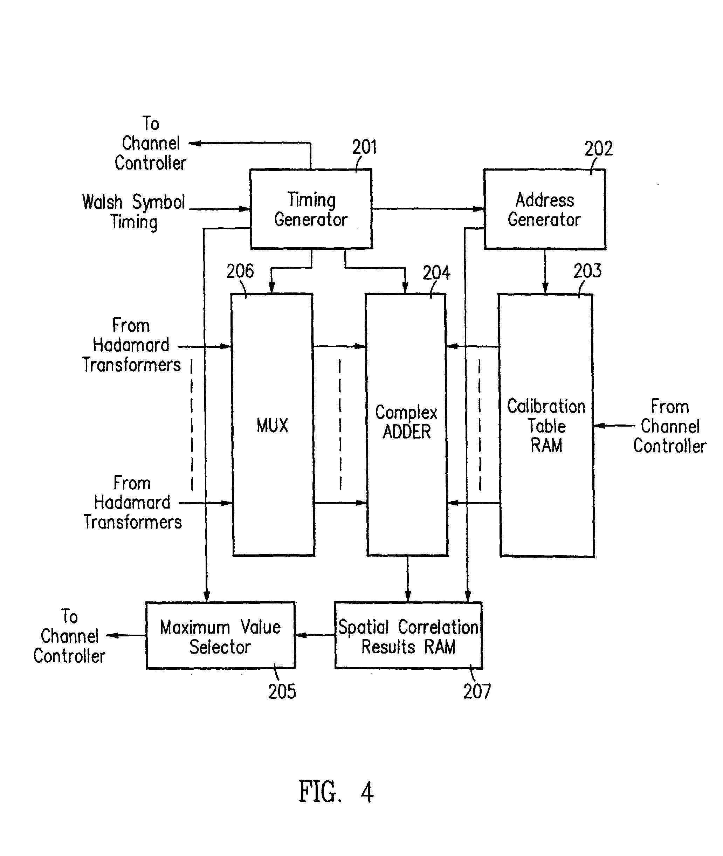

As will be described in detail below in reference to Fig. 4, spatiel correlator 105 correlates the signal matrix B with an array calibration matrix A. The matrix A is obtained off-line by calibrating the antenna array for phase and amplitude vs. angle. The correlation produces a correlation matrix C that represents the correlations of the signal received at the antenna array with both a set of predetermined directions and a set of predetermined symbols. From an analysis of the matrix C, the correlator 105 produces a signal angle of arrival (AOA) and a scalar value (AOA quality) that is proportional to the "purity" of the wave front and the signal level. This data is transferred to a controller 106 that uses it to determine the best uplink beam coefficients for this particular signal part. Typically, this entire process is performed for the four strongest multipath parts by setting the code and the "start of sampling period" time to the expected TOA, as is known in the art. In addition, time of arrival (TOA) and AOA certainty data are produced, allowing for the generation of a spatially matched filter that contains beam-forming information for each signal part. AOA results are collected by repeating the above process for many incoming information symbols. This data is used to produce an AOA histogram from which the most expected AOA and AOA distributions are calculated for every individual signal part. The AOA provides beam direction information, and the AOA distribution provides beam width information. The functions of the channel estimator 11 described above are performed in parallel with all the other channel estimators for the other mobile units being handled by the base station.

The controller 106 receives beam-forming information from each of the channel estimators 11. Thus controller 106 obtains spatial information regarding all the signal parts from all the mobile units. The controller 106 then downloads this information, in the form of coefficients, to the receiving banks 14 which use the spatial information from the channel estimators 11 to improve the reception of the signals from the mobile units. Each receiving bank 14 comprises beamformers 112 to form narrow beams towards the signal parts associated with a single mobile unit. Because the strong signal parts are selectively detected, the beamformer creates a well-matched spatial filter for the incoming signal, including its multipath components. The beamformers 112 feed spatially filtered signals to the four fingers of a conventional IS-95 RAKE receiver 113 (described in U.S. Pat. No. 5,309,474). It should be noted, however, that the beamformer outputs can be fed to other receiver types, which are known to those skilled in the art. As a result of the spatial filtering process described above, the carrier-to-interference (C/I) ratio is significantly improved over conventional CDMA systems. The improvement in C/I is about the ratio between the effective beamwidth created (about 10 to 30 degrees) to the existing antenna beams (about 100 to 120 degrees). Note that the AOA and TOA data are also transferred to a central controller 120 where the system determines the most optimal downlink beam configurations. The downlink process will be discussed later, as part of the description of Fig. 4.

In another embodiment, controller 106 can assign narrow beams (typically 2 to 3 degrees in width) within the wide aperture antenna array to cover different sections of a scattering zone for fading mitigation. The typical scattering zone around a mobile transmitter is described by a circle with about 30 to 100 wavelength size radius. Large reflectors in the neighborhood (such as very large buildings or mountains) can create secondary scattering zones that produce time differentiable (by spread spectrum receiver) multipath propagation, and hence, provide for multiple scattering zones. In traditional spatial diversity, the signal is collected at different points in space where the arriving multipath is combined with different phases. Thus, when one antenna exhibits a destructive combining situation, the other antenna has a high probability of exhibiting a desirable constructive combining situation.

By forming beams that are narrow enough to distinguish a collection of energy emanating from different sources, while still generally pointing the beams in the same direction, fading from multipath propagation can be greatly reduced. With a wide aperture array, the array weight coefficients can be changed for different beamformers to alter the beams within the array. Even though narrower beams are formed in the antenna array, high grading lobes are not considered a significant problem in the case of CDMA since the interference is the summation of all other active subscriber energies, and since the grading lobes are narrow by nature, they are mostly rejected.

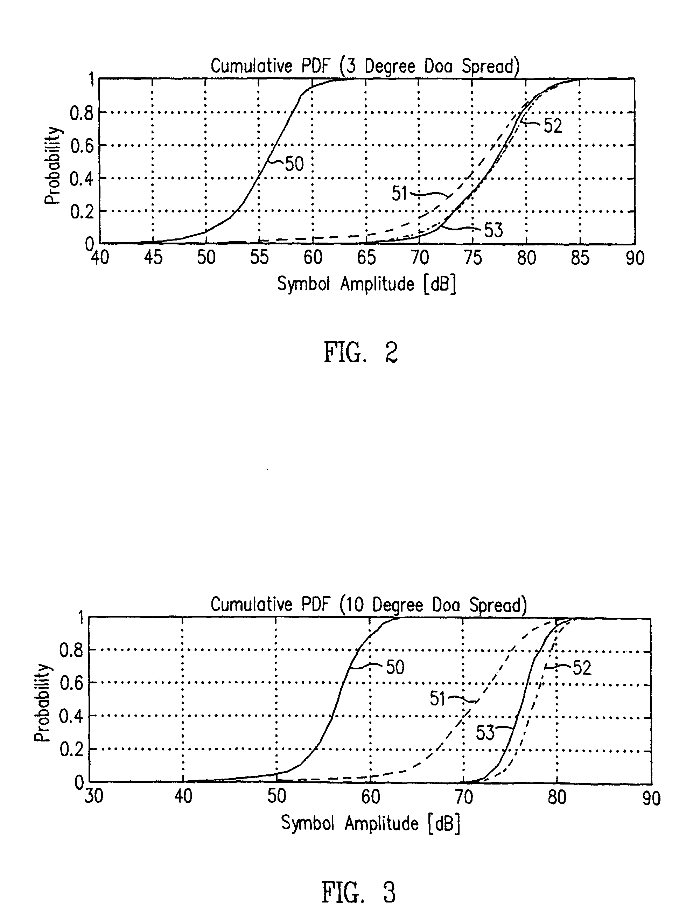

If the beamwidth is narrow enough relative to the scattering zone size, different populations of multipath sources participate in each beam, and hence, the power/time function at each beam will not be correlated with the other beams. Scattering zones are typically between 5 and 10 degrees in angle, but can vary in size, depending on factors such as the distance from the base station and area characteristics. For a 5 to 10 degree scattering zone, a 3 to 6 degree beamwidth allows adequate distinction between other beams. Since the typical RAKE receiver can accept four antenna beams, this embodiment provides for simultaneous non-correlated power/time function processing. Simulation results, such as shown in Figs. 2 and 3, show that the effectiveness of this method is very similar to the current spatial diversity method.

For small angular spread conditions (e.g., 2 to 3 degrees) associated with a small scattering zone or distant subscriber, two to four narrow beams (e.g., 3 to 6 degrees in width) are contiguously arranged with some overlap to cover the scattering zone (e.g., 5 to 10 degrees in angle). Fig. 2 shows the cumulative probability density function (PDF) or cumulative distribution function (CDF) for this arrangement, which represents the power distribution of symbol amplitude as received by a given system. The four curves represent the CDFs for various systems: the solid curve on the left 50 is for a system using standard spatial diversity, the dashed curve 51 represents a system using a single beam directed at the center of the scattering zone, the dashed-dotted curve 52 represents a system using a single beam quickly tracking the changing AOA associated with the varying multipath, and the solid curve on the right 53 represents a system using the multi-beam arrangement of the present embodiment. As seen from the shapes of the CDF curves, the effectiveness of the multi-beam arrangement is similar to that of a single tracking beam, which requires very high processing power, and standard spatial diversity. Note that the horizontal axis represents relative gain, which can be changed by using different types and/or numbers of antenna elements, etc.

As the angle spread increases, the angular separation between the beams increases, as do the beam widths. However, the number of beams remains the same. The beams are angularly spread to sample different sections of the scattering zone. In addition, the beam width is increased, limited by the size of the antenna array. As Fig. 3 shows, which represents the CDFs using the same systems as in Fig. 2, but with a wider angular spread (10 degrees), the effectiveness of the fading mitigation using the multi-beam arrangement increases when the angular spread increases (due mostly to smaller distances between the mobile unit and base station). As the angular spread inoreases, corresponding to an increase in the scatterinig zone viewing angle, the correlation between beam outputs decreases since each beam can be pointed to cover areas more widely spaced apart. As a result, there is a lower correlation between beam outputs, which improves on diversity efficiency or fading mitigation, as discussed in "Mobile Cellular Telecommmications by William C.Y. Lee.

The angle/time of arrival estimation described above and in additional detail below allows for both single scattering zone and multi-scattering zone handling. Angular spread can be determined in real time by way of histogram processing of angle of arrival samples. When fading is produced by a large scattering zone, the angle of arrival results (AOA samples) are distributed with large variation (and can be estimated by the variance of AOA results). The main AOA, however, can be estimated with the histogram center of gravity. The histogram center of gravity is determined by "smoothing" the histogram through a low pass filter (e.g., Hamming, Raised Cosine, etc.) and finding the maximum point of the "smoothed" histogram.

Thus, in the above described embodiment, an arrangement of multiple narrow beams in a wide aperture array provides fading mitigation by multiple beams for a highly directional antenta array since moderate beamwidths (e.g., 10 degrees or more) will not provide diversity because the beams "encapsulate" the whole scattering zone and hence cannot provide for non-correlated multipath combining.

Although the preferred embodiment uses an IS-95 based architecture, the above process can be implemented with any wireless protocol that makes use of a finite alphabet or training sequence. For example, in GSM systems a training sequence is available in every wireless burst. Since the training sequence is known, a correlation between the incoming signal and a stored training sequence at the receiver will produce,the same results as described above (provided frequency error is not too great relative to the sequence length). The desperado 102 and the FHT 103 are replaced in this case by a training sequence correlator (convolver). Since there is only one possibility for a training sequence, it is not required to try for many possibilities as done by the Hadamard transformer in the preferred embodiment. Systems with training sequences for use with the present invention are discussed in more detail in a later portion of the description.

Fig. 4 illustrates the details of the spatial correlator 105. In this embodiment the spatial correlator is a standalone unit. Due to redundant functionality between this unit and the current implementation of IS-95 RAKE receiver, however, the spatial correlator can be integrated with the RAKE receiver. The preferred embodiment is optimized to IS-95 (uplink utilizing M-ary modulation), however, any signal that has either a finite alphabet (limited number of symbols) or a training sequence can utilize the same idea. The use of the known signal structure facilitates simple array response vector determination and eliminates the necessity for complex covariance matrix calculation and analysis. Hence, this approach can be utilized for GSM and TDMA wireless air-interfaces as well.

The columns of the signal matrix B (i.e., the spatial response vectors from the FHTs) pass through a multiplexer (MUX) 206 and are then correlated with the columns of the array calibration matrix **A** which is stored in a random access memory (RAM) 203. In abstract terms, the correlation process is performed by multiplying the conjugate-transpose (Hermitian) of the calibration or array manifold matrix **A** by the signal matrix **B**. The result is a correlation matrix $\mathbf{C} = \mathbf{A}^H\mathbf{B}$. It is important to note that this abstract calculation may be implemented in many different ways, all of which are mathematically equivalent to each other. The calibration matrix **A** is also known as the array manifold matrix and is generated by measuring the antenna array response in an antenna test range. Each column of **A** represents the response of the antenna array in one of a predetermined set of directions. For example, if the angular space is divided into 360 directions, then each of the 360 columns of **A** is an N-dimensional vector representing the response of the N antenna array elements in one of 360 directions from the array. In the computation of the matrix **C,** these 360 vectors are spatially correlated with the 64 columns of the signal matrix **B** to produce a 360 x 64 element matrix, where element i•j represents the correlation of the received signal with the $j^{th}$ symbol in the $i^{th}$ angular direction.

In the preferred embodiment, the correlation is performed very efficiently through the use of a unique and simple calibration table representation which allows the matrix multiplication to be implemented without any multiplications. Each complex-valued entry of the calibration table matrix **A** is quantized such that both real and imaginary parts are each represented by two bits only. More specifically, each part is represented by two bits, one numeric bit and one sign bit, thus: (0,0)=-0, (0,1)=+0, (1,0)=-1, (1,1)=+1. Each complex-valued entry is therefore represented by just four bits. The reduced resolution in this simple quantization scheme is compensated by increasing the number of array elements to about twice relative to current base station arrays. This simple bit-plus-sign data structure allows the vector dot products between the matrix columns to be calculated using a complex adder 204. In conventional implementations, the vector dot product would require a collection of N multipliers. The technique of the present invention, therefore, dramatically simplifies the implementation of the spatial correlation operation.

The complex-valued entries of the calibration or array manifold matrix A may be subject to errors due to the analog parts of the transmitting and receiving channels experiencing non-predictable changes from factors such as temperature change, system component degradation, variations in transmit and receive power, etc. By measuring the phase and amplitude response of the channels, the behavior of the receiving and transmitting channels can be known, thereby allowing correction of the entries of matrix **A**, which represent the response of the N antenna array elements in a given direction from the array. Measurement of the phase and amplitude response of a signal channel requires a "sounding" operation, i.e., injection of an analog signal into the channel (with characteristics that are matched to the channel frequency and amplitude response) and determination of signal amplitude and phase at the channel output.

In the case of an analog or TDMA base station, injection of a sounding signal may interfere with the on-going data transmission. If the sounding signal is made low, the sounding accuracy will degrade. CDMA communication allows for "embedding" the sounding signal within the general data flow without losing sounding accuracy or interfering with the main data signal. Since the data signal is coded-spreaded (IS-95 or similar), the sounding signal can be either non-modulated or coded-spreaded, with statistical orthogonality to the data signal. A "matched accumulator" (using a matched de-spreading code) on the channel output allows for coherent decoding of the sounding signal (to determine its phase and amplitude), while the data signal contribution to the detector output (being randomly distributed in phase and amplitude) is nullified. The measured phase and amplitude data can be used to correct the analog channel response, thereby eliminating phase and amplitude mismatch in a multi-channel receiving and transmitting system.

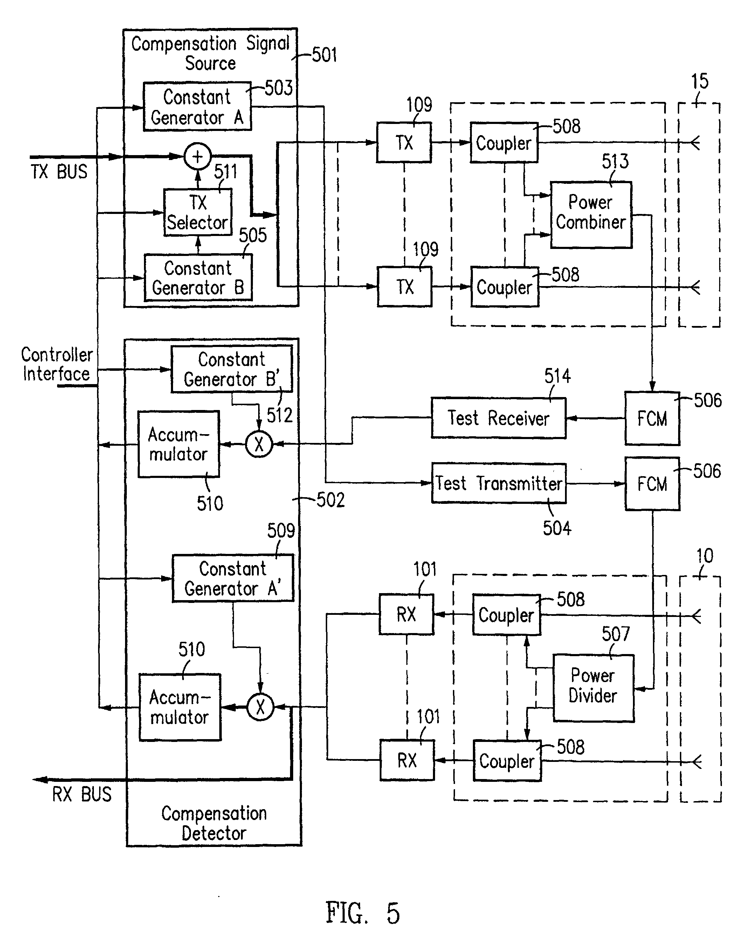

In one embodiment of this method, shown in Fig. 5, compensation circuits 501 and 502 are coupled between the N transmitters 109 and the transmitting bank 12 (Fig. 1) and between the N receivers 101 and the channel estimators 11 (Fig. 1), respectively. Compensation signal source circuit 501 provides sounding signals into the transmit (TX) and receive (RX) channels. A constant generator A 503 in compensation signal source circuit 501 supplies a constant value A to a test transmitter 504, providing test transmitter 504 with a signal of a known amplitude and a zero phase. A constant generator B 505 in compensation signal source circuit 501 provides a constant value B to selected ones of transmitters 109 for channel response evaluation.

For compensation in the receiving channels, the output of test transmitter 504 is frequency converted to match the RX modules using a frequency converter module (FCM) 506, i.e., eliminating the phase and amplitude differences between the transmitter and RX modules. This can be done by measuring these values and then compensating for them during the matrix calculations. FCM 506 injects the sounding signal to all receiving channels through an equal phase and amplitude power divider 507. Each of a set of N couplers 508 couples the sounding signal with corresponding antenna elements from receiving antenna array 10. The signals from each of the N couplers 508 is then fed to the associated one of the N receivers 101 for down-conversion to produce digital signals having I and Q signal components. The set of N signals can then be placed on a receiving bus for use, such as inputs to channel estimators 11 and receiving banks 14 of Fig. 1.

The received output or channel under evaluation (digital output) is selected and multiplied by a signal generated from a constant generator A' 509. The signal from constant generator A' 509 is made equal to constant generator A 503 to decode or de-spread the sounding signal from the received data signal. Then, the digital values (I and Q) are accumulated by a compensation detector accumulator 510. The accumulation process period is limited only by the channel response variation rate (assumed to be very low) and the size of the registers in the accumulator 510. Hence, the accumulation process provides an integration time sufficient to extract the sounding signal out of the signal mixture on the receiving channel under evaluation. The sounding signal "can be -30 dB relative to the total signal energy in the channel. By coherently decoding the sounding signal, the phase and amplitude of the sounding signal can be measured to determine the phase and amplitude response of that particular receiving channel. For example, I and Q samples of the RX are directly accumulated for a determined integration period. The I and Q data includes both amplitude and phase of the measured channel.

The procedure described above is repeated for each receiving channel until the phase and amplitude responses of all the receiving channels are known. The channel compensation responses for each channel are then combined to form a "compensation vector", which can be used to correct the amplitude and phase of the measured or manipulated data. Entries in the calibration matrix **A**, stored in RAM 203 (Fig. 4), can be corrected by dividing each row of matrix **A** by the corresponding row vector (complex value) of the compensation vector. This operation results in corrected calibration matrix, eliminating errors in all the receiving channels.

A similar procedure is utilized for compensation in the transmitting channels. A transmission channel selector 511 in compensation signal source circuit 501 selects a transmitting (TX) channel from a transmitting bus, which can emanate from transmitting banks 12 (Fig. 1). A constant (which can be very small) from constant generator B 505 is added to the signal from the selected channel to be compensated. The constant signal is alternated between positive and negative values such that constant generator B 505 is equal to a constant generator B' 512. The resulting signals are then converted by the set of N transmitters 109, sent to a set of N couplers 508, and combined at a power combiner 513. The combined signal is frequency converted by FCM 506 and then down-converted by a test receiver 514 to produce digital I and Q signal components. The combining, although it may degrade the SNR conditions, allows for a total passive arrangement that is very important when the antenna array is located at the top of a tower (which is often not easily accessible).

The output of test receiver 514 is multiplied by a signal generated from a constant generator B' 512. The signal from constant generator B' 509 is made equal to constant generator B 505 to decode or de-spread the sounding signal from the transmission channel. Similar to correlation of the receiving channels described above, phase and amplitude responses from the transmission channels can be used to correct transmission coefficients from a transmission coefficient table (not shown). Thus, the compensation system of Fig. 5 evaluates channel responses of both transmit (TX) and receive (RX) sections of the base station.

Referring back to Fig. 4, timing generator 201 synchronizes the spatial correlator process to the Walsh symbol period (i.e. the end of the Hadamard transform) that is derived from the base station pilot timing. The N x 64 signal matrix is latched into a MUX circuit 206 which provides the column vectors to the complex adder 204 one at a time. For each vector, the complex adder 204 performs separate correlations of the vector to every one of the columns of the calibration matrix **A**. Because the calibration matrix data are only 0, 1, or -1, the data are used in the complex adder 204 to decide whether to respectively null, add, or subtract each element in the row vector. A RAM address generator 202 is driven also by the same timing generator 201 to synchronize the presentation of the columns of calibration data with each latched vector.

Note that the number of array elements N does not change the correlation matrix dimensions, which are determined only by the number of predetermined symbols in the alphabet and the number of pre-defined angular directions. The correlation matrix C is stored in a spatial correlation RAM 207 and processed by a maximum value selector 205 that is a simple serial comparator in the preferred embodiment. The end result of the spatial correlator process is the best expected AOA for the selected signal part and an associated "inner product" value (used as a certainty factor). This result is reported to the controller 106 (Fig. 1) only if a preset threshold, discussed below, has been crossed. This threshold value is updated from time to time as necessary. When the threshold has been crossed, the controller registers the time offset associated as the signal part TOA. This information is used to estimate the mobile unit range from the base station. It is possible to identify more than one maximum at a time utilizing a recursive process: after identifying the largest value in the correlation matrix, the neighboring matrix elements are ignored (ignoring the neighboring elements minimizes the probability for "non peak" selection) and another "peak" search is executed. This feature allows the identification of multipath parts that cannot be differentiated in time alone (as done in existing RAKE receivers), allowing for beam-forming reception of small time spreaded multipath. This approach has great advantage for close to base station mobile unit communication.

The threshold value is calculated by averaging the reported results, I and Q, over a long averaging period "window". For example, K reported results are accumulated at the controller 106, and the accumulated result is divided by K. Since most of the reported results are generated by non-time correlated elements, the results are "noise-like", and averaging them provides a good estimate of the channel noise level. Since the channel noise is a linear function of the number of active mobile units, this level needs to be updated from time to time as stated.

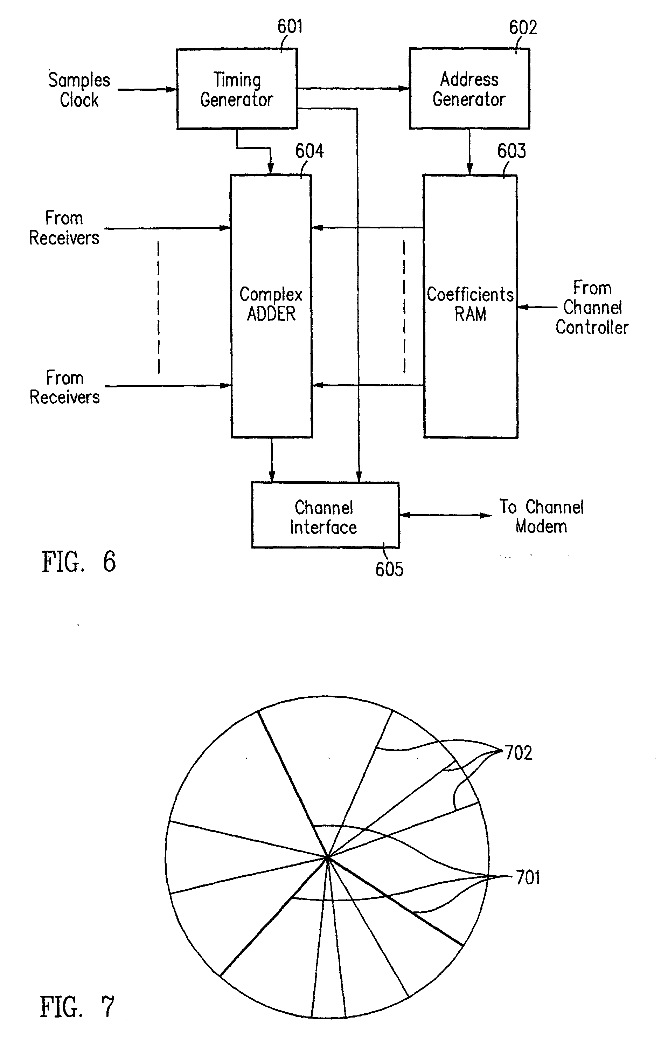

Fig. 6 details the uplink beamformer 112 of Fig. 1. In this embodiment, the uplink beamformer is presented as a stand-alone unit. However, it is possible to integrate the beamformer 112 into the channel estimator 11 due to the "bit-plus-sign" arithmetic that makes it a very low gate count device. Signal outputs from the N base station receivers 101 are fed into a complex adder 604 for beam-forming. Since the data rate for IS-95 is about 10 Mega-samples per second, the complex adder 604 can execute at least four vector sums per one vector data sample using present technology. The beam-forming coefficients are downloaded from the controller as described above into a coefficient RAM 603. A timing generator 601 and an address generator 602 cause the coefficients to "rotate" into the complex adder 604. The coefficients are used as described above, in reference to the spatial correlator of Fig. 4, to form a dot product using only complex addition. The vector summation result is fed into an interface unit 605 for transferring the result to the RAKE receiver modem. In other embodiments, any finite alphabet or training sequence protocol based modem could be used. The effect of the beamformer 112 is to spatially filter the incoming signal to preferentially select for signals arriving from the known directions of the signal parts of a particular mobile unit. Signals from other directions are attenuated, and the reception of the desired signal is improved.

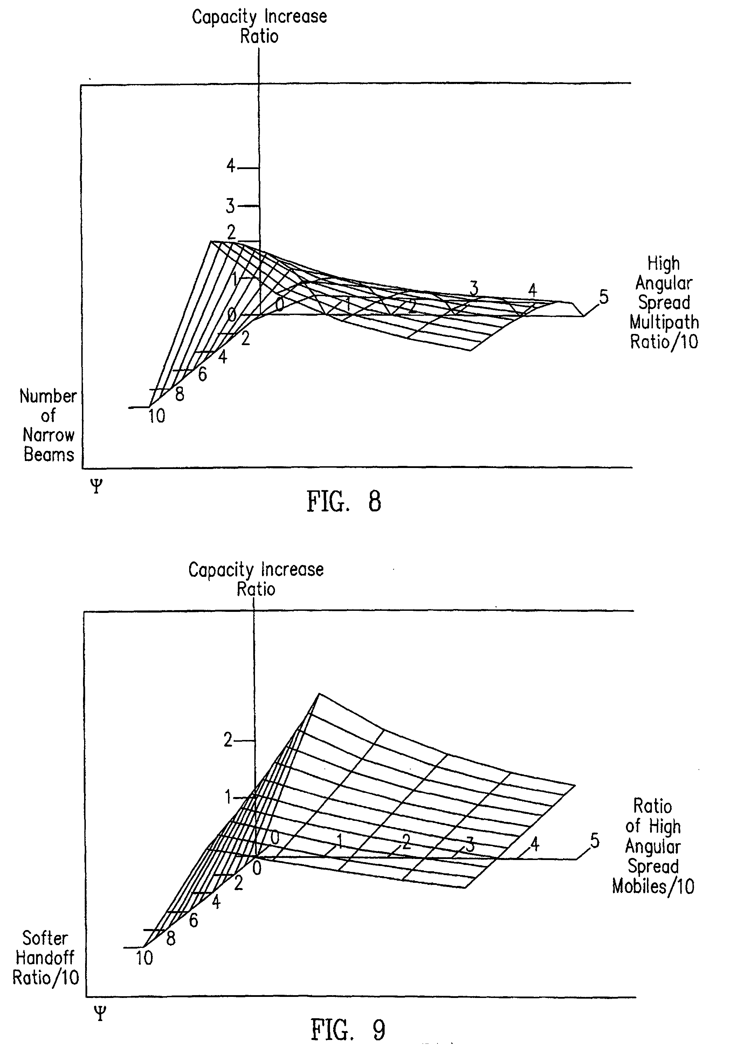

Fig. 7 illustrates an example of a spatial distribution of downlink beams. Downlink management is quite different from the uplink since IS-95 is not a symmetrical protocol and uplink frequency is different from the downlink frequency by at least 60 MHz (cellular). The difference in frequency causes the uplink and downlink channels to be non-correlated. The AOA and TOA of the uplink and downlink, although statistically similar, may differ significantly. Hence, the downlink can be only statistically estimated based on data collected in the uplink, as described above. In addition, the downlink requires broadcasting of a pilot signal to associated mobile units. As a result, individual downlink beams are not possible; only "mobile group" beams are realizable. Hence, the downlink approach is based on a combination of wide and narrow beams determined by data collected in the uplink.

Thus, referring to Fig. 1, transmitting beamformers 117 in transmitting banks 12 are coupled to the spatial correlator 105 via the central controller 120 to receive AOA and TOA data for generating spatial beams in accordance with the beam-forming information. The spatial beams are selected from a set of calculated beams comprising narrow beams and overlapping broad beams, where the narrow beams are phase matched to the overlapping wide beams. The beamformers 117, which are conventional digital beamformers, take signal samples (scalar I and Q) and multiply them by the weight vector to produce a vector, where each element includes a scalar represention of the signal going into the individual antenna. Routing circuits 116 and routing and summation circuits 115 are data switches to route signals coming from the plurality of transmissions into the beamformers 117 and the transmitters 109. The beam configuration is determined by the mobile unit distribution around the base station. The wide beams are required to assure proper coverage at close proximity to the base station where most of the downlink signal arrives to the mobile unit by way of scattering from nearby reflectors. The system adjusts the wide beams 701 to assure proper coverage for the mobile units close to the base station. The narrow beams 702 are adjusted mainly to accommodate "far away" mobile units. Since most of the mobile units will be in the outer coverage area, the narrow beams are expected to service the majority of the mobile units. Increasing the number of downlink beams causes the increase of softer hand-off, thereby countering the increase in capacity. Hence, assigning beams in the downlink must be done very carefully.

The increase in downlink capacity can be estimated as follows:

$$Q*P+Q*P/N+X*P+X*P/N+(Q(1-P)/N+X(1-P)/N)*(1+B) = Q$$

$$\Psi = \frac{Q+X}{Q} = \frac{1}{P+P/N+(1-P)(1+B)/N}$$

We assume a uniform mobile unit distribution, and a maximum illumination of Q, that is the maximum number of simultaneous transmission channels including softer hand-off.

The term $Q*P$ is the number of mobile units that come in with high angular spread, called "Wide Angles". $Q*P/N$ is the portion of the portion of Wide Angles that are within the narrow beam, and are all in softer hand-off, thus, adding to the illumination in the overlapped sector twice.

If, as a result of the beams combination X mobile units can be added, $X*P$ additional Wide Angle types are added (assuming P remains as before), out of, $X*P/N$ are following the same rule as for the $Q*P/N$ above.

In the narrow beam space, we get $Q(1-P)/N+X(1-P)/N$ mobile units, but due to some hand-off caused by the overlap we must increase the value of their illumination by factor $1+B$. B is the ratio of the number of users in handoff to the total number of users, which is determined experimentally. B can be kept small since outer cell associated mobile units will naturally prefer the narrow beams.

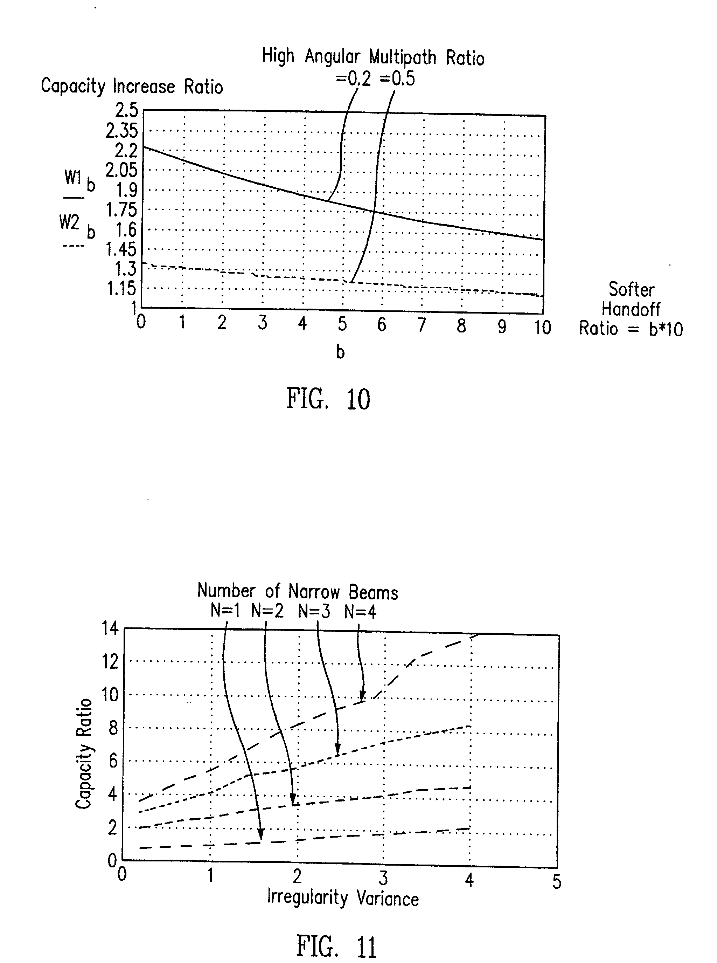

Fig. 8 is a graph of the capacity increase ratio with respect to both the number of narrow beams and the probability/10 of wide angular spread multipath with softer hand-off probability fixed at 20%. Fig. 9 is a graph of the capacity increase ratio as a function of hand-off probability/10 and the wide angular spread multipath probability/10 for four narrow beams. Fig. 10 is a graph of two cases of wide angular spread multipath for variable hand-off ratio and four narrow beams. Figs. 8-10 show the improvement in capacity relative to non-adaptive array base stations.

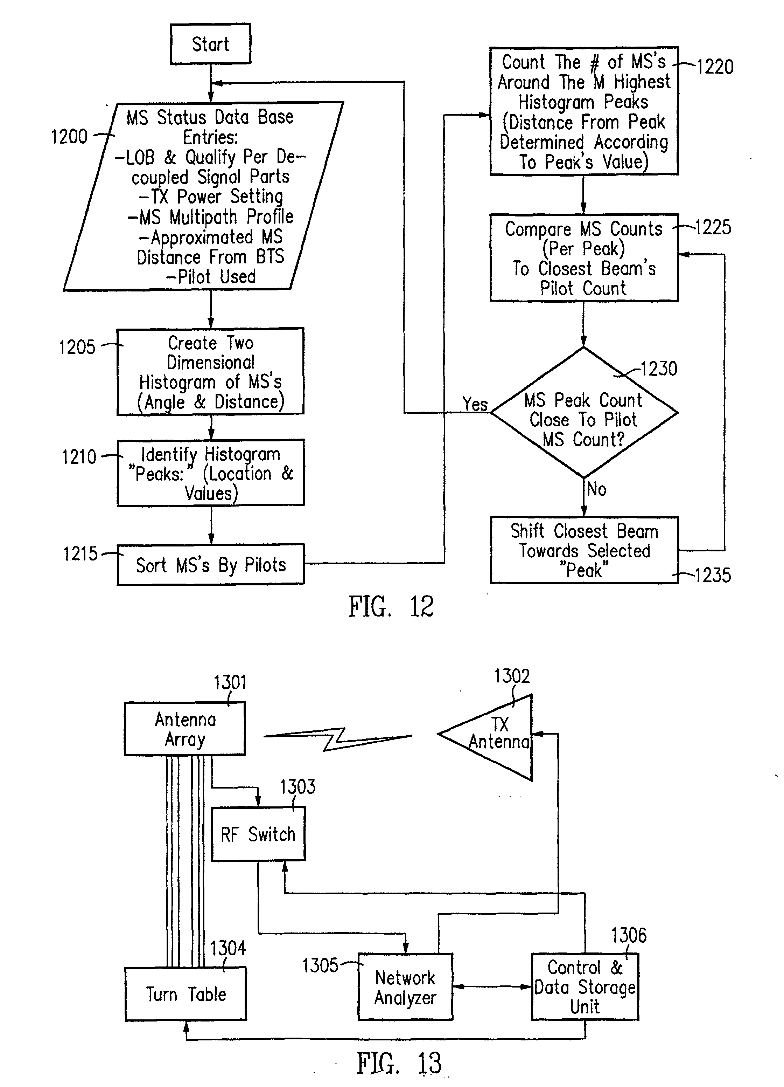

Following the above analysis, the enhancement of capacity for four narrow beams within one wide beam is approximately two. If the mobile unit distribution is non-uniform, the enhancement can be even higher. Fig. 11 is a graph of the expected capacity ratio for different density variance of mobile units. This improvement requires the narrow beam borders to be adjusted to avoid mobile unit density peaks. The borders can be adjusted, for example, according to the description accompanying Fig. 12 below. This adjustment function must be gradual to avoid excessive hand-off while changing the beams.

Fig. 12 presents a flowchart of the downlink beam-forming determination process. Mobile unit spatial data is collected and stored in memory in block 1200. This data is then used to evaluate the mobile unit distribution around the base station by sorting the data into a two dimensional histogram in block 1205. The histogram "peaks" are identified in block 1210 as follows: a two dimensional "smoothing" filter is executed to eliminate noisy histogram "spikes" and a common two dimensional "peaks search" process is utilized. For a system that is capable of forming M downlink beams, M "peaks" are sorted in block 1210. After the mobile units are sorted by associated pilot signals in block 1215, the number of mobile units around the M highest histogram peaks are counted in block 1220. The mobile unit count is compared to the closest beam's pilot count for each of the M peaks in block 1225. Then in block 1230, the mobile unit peak count is compared to the pilot mobile unit count. If the mobile unit peak count is close to the pilot mobile unit count, then the next set of spatial information is stored in block 1200. However, if the mobile unit peak count is not close to the pilot mobile unit count, then the closet beam is shifted towards the peak in block 1235. The pilot count of the shifted beam is then compared to the other mobile unit counts in block 1225. Thus, a closed loop process adjusts the boundaries of the downlink beams and equalizes the number of mobile units associated with them. Narrowing the beams will cause some mobile units to hand-off to different pilots leaving only mobile units close to the selected "peak" hanging on to the associated pilot. This process proceeds at a very slow pace to avoid excessive hand-off.

Fig. 13 presents an apparatus to generate the antenna array manifold (or calibration) matrix A. An antenna array 1301, incorporating a collection of antenna elements, is installed on a support mast that is connected to a turn-table 1304. A controller 1306 commands the turn-table to rotate in pre-determined angle steps or the number of angular directions f the array manifold A. A network analyzer 1305 transmits through a transmitting antenna 1302 an RF signal with a particular angle, which is received by the antenna array 1301: The signals received at the elements in the antenna array 1301 are routed through an RF switch which is well known in the art. In the preferred embodiment, the antenna array is circular, but the invention can be implemented with any arbitrary array shape. The RF signal collected for each antenna element in this case can be written as follows:

$$A_{k,\theta} = F_{k,\theta} \cdot e^{j \cdot \frac{2\pi(R\cos(2\pi k/M - \theta)}{\lambda}},$$

where A represents the array manifold function, k is the element number, θ is the relative angle of arrival (created by rotating the array relative to the RF signal source), M is the total number of antenna elements in the circular array, and λ is the RF signal wavelength. The data is collected and stored in the controller 1306, which also includes a data storage unit.

Array manifold information can be used to more accurately determine multipath angle of arrival (AOA) values and coefficients through spatial correlation in fast fading environments with high angular spread and non-predictable multipath. As previously discussed, spatial processing includes estimating an array response vector (comprising electrical amplitude and phase of all antenna array elements) of an IS-95 based CDMA signal to determine multipath angle of arrival (AOA) values and coefficients through spatial correlation. These coefficients are then used to optimally combine a plurality of antenna outputs (through a down-conversion to base band). Thus, the ability to accurately estimate the array response vector is an important objective in CDMA systems. However, the estimation accuracy is limited by the fading rate (Doppler shift caused by a moving mobile unit), since the time to collect coherent data is reduced as the fading rate or Doppler rate increases. This problem becomes more severe as cellular systems move from the 800 MHz range to the 1900 MHz range or higher, which can increase the fading or Doppler rate by a factor of two or more.

In addition, with a frequency division duplexing (FDD) system, the forward link (transmission from the base station'to the mobile unit) and the reverse link (transmission from the mobile unit to the base station) occupy different carrier frequencies or bands, but overlap in time. This difference between the forward and reverse link frequencies reduces the correlation between fading of the two links, thereby allowing spatial diversity to be used only with the reverse link and not the forward link, i.e., array response vector estimation for forward link array coefficients cannot be accurately determined.

Various methods for array response vector estimation have been proposed, some of which are characterized by the degree of knowledge of the temporal and spatial structure of the signal impinging on the antenna array. Knowledge of the temporal structure of the signal (which requires a known training sequence, pilot signal, constant envelope, etc.) leads to algorithms such as MMSE (Minimum Mean Square Error), CM (Constant Modulo), etc., which are sometimes called "blind" or "half blind" estimation techniques: Blind techniques do not use any apriori information on the signal temporal structure and antenna array manifold, while half blind techniques can use temporal structure. A major disadvantage of these blind methods is the long integration time required for convergence, especially when the number of interference sources is large (typical for CDMA), which reduces the efficiency of solutions based on nullifying specific interferers. Furthermore, using a dedicated pilot signal at the reverse link requires the pilot signal to be low power in order to minimize capacity loss in the reverse link. However, a lower power pilot in coherent demodulation requires a longer integration time to assure sufficient reference signal quality. Also, an unknown or varying signal time of arrival (TOA) requires continuous "time searching", and hence, prohibits a slow convergence process at each time hypothesis. In CDMA type systems, the signal timing must be recovered before any demodulation can take place. Hence, a search process is conducted by a series of hypotheses through which the system is varying the time of reference correlating sequence and then cross-correlating with the incoming signal (e.g., IS-95C or cdma2000). If matched filter hypothesis is executed (W-CDMA), the sampling point needs adjustment. The time required by each hypothesis must be short to allow a quick search (we assume the determination cannot be done before the spatial process since there might not be a sufficient signal to noise ratio at that point).

The types of algorithms mentioned above exploit the statistical properties of the signal; however, they do not exploit any knowledge of the spatial characteristics of the array (i.e., the array manifold). Although the array response vector can significantly deviate from the array manifold in high angular spread and non-predictable multipath structured environments, even partial knowledge of the array manifold could dramatically reduce the required data integration time and speed the computational process. Array manifold information allows true data processing in the spatial domain by exploiting the knowledge of relationships among different antenna outputs to facilitate simultaneous two-dimensional averaging in time and space.

As mentioned above, in frequency division duplexing (FDD) systems, there is only a statistical connection between the coefficients in the reverse link array response vector and the ideal array response coefficients in the forward link due to the frequency difference between the two links. Hence, determining the forward link transmission coefficients must be done either through an estimation process in conjunction with received power indication feedback at the mobile unit. A power feedback method without initial forward link estimation may be very slow or may not converge at all due to the variable shadowing and fast fading conditions typical of mobile environments.

However, knowledge of the array manifold can be efficiently used to expedite determination of weight vector coefficients for the purpose of signal-to-interference ratio (SIR) enhancement. Consequently, CDMA network capacities could be significantly increased. In most environments, such as rural, suburban, and urban, transmission sources that are close to a base station create rich, wide angular spread multipath (with continuous distribution in time and space). This will "push" the array response vector away from the array manifold, i.e., increase the Euclidean distance between the array response vector and the array manifold. Distant mobile units, however, provide for a more discrete distribution in time and space, i.e., time distinguishable signal paths have smaller angular spreads. Since most subscribers are on the cell edges (which are the most problematic for capacity), array manifold assisted estimation (MAE), which estimates the array weight coefficients vector by looking for the array manifold closest to the measured array response vector, becomes very practical. Although the usefulness of array manifold knowledge degrades as the mobile unit approaches the base station, the SIR significantly improves for the entire cell.

CDMA demodulators include a Time of Arrival (TOA) searching mechanism and a plurality of demodulating channels based on fast Hadamard transformers (FHT) for IS-95 based systems (such as, e.g., discussed in Andrew J. Viterbi, *CDMA Principles of Spread Spectrum Communications*) or PSK demodulating channels for other systems (e.g., cdma2000, W-CDMA, and UTRAN). Each demodulating channel is generally connected to a selected antenna and tuned to a TOA determined by the searching mechanism. The products of all demodulating channels are added together (coherent or non-coherent combining), in compromise between performance and complexity. Coherent combining requires determination of relationships among all elements to be combined to ensure maximum constructive combining (weight vector). Non-coherent combining is done by squaring all combined elements, thereby eliminating potential destructive combining through elimination of phase between the combined elements. Non-coherent combining is simpler and easier to implement, but less efficient, while coherent combining is potentially more efficient but requires a complex search. When a sufficient (i.e., discriminable) TOA spread exists (for CDMA, it is the inverse of the chip rate, and for IS-95, it is chip duration, i.e., 800 msec), the plurality of demodulating channels provides for time diversity that can enhance the standard spatial diversity employed by most cellular base stations.

As mentioned above, products from a plurality of demodulating channels can be linearly combined by calculating the weight vector as part of spatial processing to enhance system performance. The signal-to-noise improvement can reach 10*logM, where M is the number of antenna elements.

Efficient signal combining in the antenna array depends, in part, on the ability to estimate the weight vector (coefficients) used for combining:

$$P = W^T \cdot V$$

where P is a scalar value describing the result of the combining process, W is the weight vector, and V is the array response vector.

Fast estimation of the combining coefficients is essential to get close to this goal of estimating the weight vector during the channel coherency period, which is less than 1/4 of the inverse of the Doppler rate. A simple approach is possible to enhance a CDMA demodulation process in fast fading conditions using an antenna array to estimate a multipath profile in fading channels and processing the data for beam formation. By exploiting the array manifold in the estimation of array coefficients in both reverse and forward links, the CDMA demodulation process can be enhanced in fast fading conditions using an antenna array to estimate a multipath profile in fading channels and processing the data for beam formation.

The multipath profile can be defined as a two-dimensional distribution function of Multipath Power vs. AOA and TOA. When a signal arrives at the antenna array, the antenna outputs are collected into a single vector called the array response vector. A collection of array response vectors created by stepping the arrival angle of the signal (in two or three-dimensional space) produces the array manifold. Every antenna array can be characterized by an array manifold. The array manifold is a trace within an M dimensional vector space, where M is the number of antenna elements, as is discussed in above.

In a non-multipath situation (i.e., an ideal wave front), the array response vector is "touching" a point on array manifold, i.e., the Euclidean distance is null. When multipath is present, the array response vector is a linear combination of all arriving multipath wave fronts. In this case, the array response vector is "getting away" from the array manifold, i.e., the Euclidean distance is increasing. The distance between the array manifold and the array response vector statistically increases as a function of multipath level, multipath angle spread, and interference power. Interference includes the combined sum of thermal noise and other incoming transmissions. As for any case with a considerable number of contributing random elements, the distance from the array manifold to the array response vector is assumed to have a Gaussian distribution, where the mean lies on the array manifold itself and its variance is related to the above mentioned elements. As the Euclidean distance increases, the angular spread increases. Assuming thermal noise and other transmission interference can be substantially reduced by integration and de-spreading (CDMA), the major factors causing large separations between the array response vector and array manifold are multipath level and angular spread.

The spatial correlator operation can be described by the following operation:

$$\Omega = V^H \cdot A$$

where V is the array response vector (H denotes Hermitian), and A is the array manifold matrix (with columns indexed by $\theta$). Each row in A represents one element of the array manifold, and each column in A represents one angle in the array manifold. The result of the spatial correlator operation is a vector $\Omega$ of values with magnitudes corresponding to the level of correlation between the array response vector and the array manifold for all given possible angles (array manifold index, $\theta$). Sorting the magnitude of the largest $\Omega$ element means selecting the best fit achievable (the theoretical maximum happens when the weight vector W lies on the array manifold), i.e., having a point touching on the array manifold. In the case of angular spread that exceeds the array beam width (array beam width is a subject well known in the art), the above process can be described as a moving beam within an angular sector containing Rayleigh faded signal sources (their combined power is constant), searching for the maximum value at a given instance. The larger the sector, the larger the sampling population, leading to increasing the probability of finding a large power value.

Since all the above operations are linear, both the relative amplitude and phase of the incoming signal are preserved ($\Omega$ at the selected $\theta$). Hence, this process can be utilized for both non-coherent demodulation (e.g., M-ary) and coherent phase demodulation (i.e., PSK) schemes. In pilot-assisted or coherent demodulation, the estimation of the relative phase of each signal path (RAKE finger) can be quicker and hence more accurate in fast fading environments, resulting in better demodulation efficiency and more accurate coherent fingers combining at the RAKE receiver.

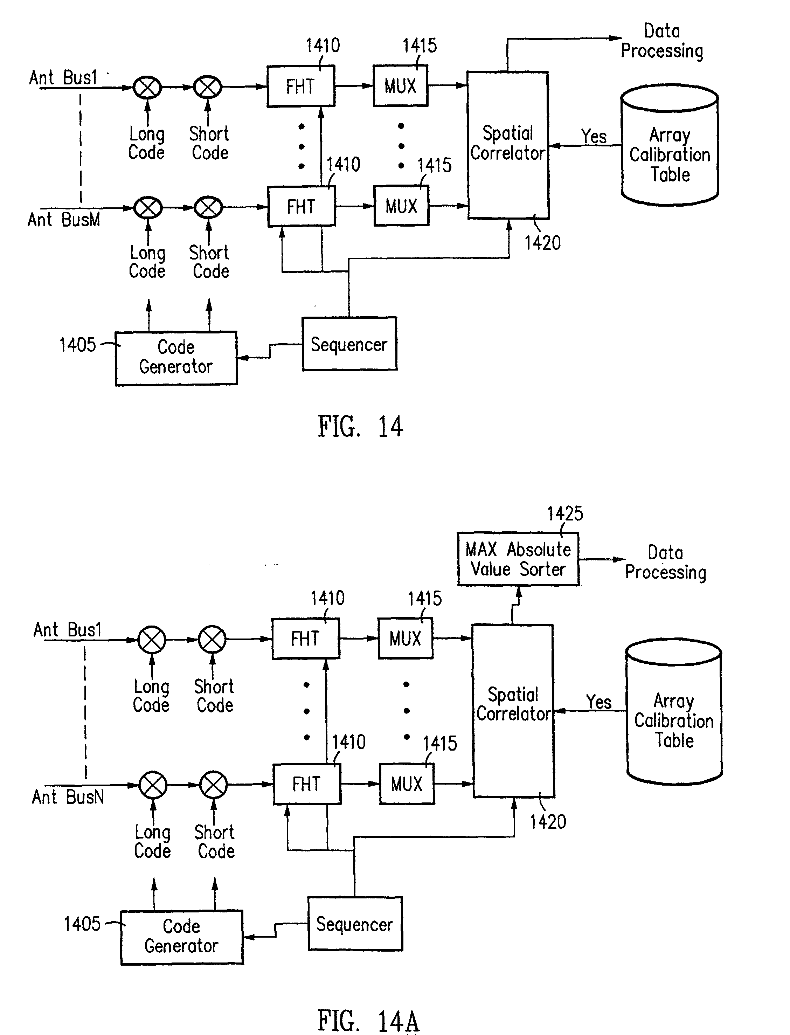

In order to construct the multipath profile, spatial processing is used to estimate the AOA values. Fig. 14 shows a possible embodiment of a 2D CDMA demodulator for non-coherent modulation transmission (IS-95 reverse link) to estimate signal AOA values. In Fig. 14, a single "finger" (demodulation channel) of a Manifold Assisted Spatial Demodulator for an IS-95 based system is shown. This type of demodulator utilizes the knowledge of the array manifold (as created in clean environment, i.e., no scattering sources) to enhance the demodulation process. In our case, the incoming array response vector is cross-correlated against the array manifold matrix to provide for a "magnifying glass" effect. The system "looks" at the signal only after the spatial correlation takes place (magnifying glass) since only then may the signal to noise ratio be sufficient to make any decision. The full MAD implementation includes a plurality of MAD "fingers" (at least two, to allow for minimum time diversity). The MAD finger described can perform both time search and demodulation.

I and Q components of the signal are fed from an antenna array with M elements. The M antenna element outputs are down-converted to a base band frequency and digitized. The M signals are than de-spread (as described above or in Andrew J. Viterbi, *CDMA Principles Of Spread Spectrum Communications.* along M parallel correlation channels as each signal is multiplied by the appropriate long and short codes from a code generator 1405. After de-spreading, the signals are input into a bank of fast Hadamard transformers (FHTs) 1410. The complex-valued outputs of the M FHTs are then fed to M multiplexers 1415 to multiplex the outputs into 64 (for IS-95) possible array response vectors (per possible symbol) and fed one by one into a spatial correlator 1420. The spatial correlator executes the spatial correlator operation described above for each of the 64 candidate array response vectors. Each array response vector is cross-correlated in the spatial correlator 1420 according to the spatial operation described above with the 256 vectors in the array manifold, although other numbers of vectors are also possible. The number of potential complex multiply-and-accumulate (MAC) operations required per symbol (assuming 256 possible angles and M=16 antenna

elements) is

$$NN = M*64*ANGLE\_RANGE = 16*64*256 = 262,100.$$

This corresponds to $262,100*5000 = 1.311*10^{10}$ MAC operations per second, where the rate is 5000 Hz since duration of an IS-95 symbol is 200 msec. The estimated AOAs output from the spatial correlator can then be used for further processing, as described below.

As disclosed earlier, if a sufficient number of antenna elements is used (i.e., 6 or more) the array manifold can be represented with very low resolution or a small number of bits without losing too much in the magnitude of $\Omega$. Reducing the number of bits allows for simple ASIC implementation and less required processing speed since no real multipliers are required and memory size requirements are small. Hence, the above process becomes realizable within medium-sized ASICs.

In another embodiment, shown in Fig. 14A, a "Max Absolute Value Sorter" 1425 selects the maximum value in the matrix $\Omega$ (AOA and Walsh Symbol index) resulting from the spatial correlation operation; which is a 64 x 256 size matrix (M is 64, and number of angle steps for the manifold calibration table is 256). The spatial correlation operation is repeated several times (the number of times depends on the coherency time available, i.e., Doppler period divided by a number ranging from 5 to 10.) The resultant population of AOA values is averaged to determine the column in the manifold matrix, which represents a vector in the array manifold. This column is used as the weight vector for the next incoming Walsh symbol's weight vector. This "next symbol" produces a matrix containing 64 possible array response vectors, which are each multiplied by the above selected weight vector to produce again M-ary values. The rest of the process is well known, such as described in Andrew J. Viterbi, *CDMA Principles of Spread Spectrum Communications,* at page 100, Figure 4.7.

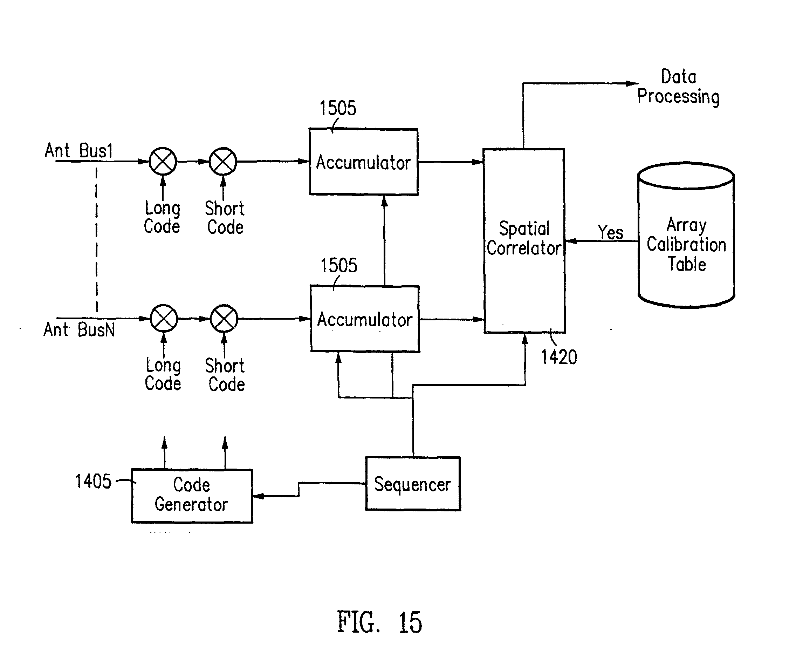

The FHTs of Figs. 14 and 14A can be replaced with standard complex accumulators 1505 (as shown in Fig. 15 for the demodulator of Fig. 14), such as those discussed in above-referenced U.S. Pat. Provisional App. Serial No. 60/077,979, entitled "Capacity Enhancement for W-CDMA Systems", if a pilot signal (or known continuous training sequence) is embedded in the transmitted signal for coherent demodulation. The coherent demodulator or AOA estimator could be implemented in a cdma2000 type system as described in "The cdma2000 ITU-R RTT Candidate Submission produced by TR45.5 (TIA)" or in any other embedded continuous pilot or training sequence assisted demodulation scheme.

The results of the de-spreading channels are grouped together to form an M-valued array response vector, and a search is performed only for a single possible symbol, instead of 64 possible symbols for non-coherent estimation, in the embedded pilot signal or training sequence. In this case the computation load is significantly lighter since the data symbol is known. Thus, the number of potential MAC operations is, for 16 antenna elements or a 16-valued array response vector,

$$NN = M*ANGLE\_RANGE = 16*256 = 4096$$

This corresponds to $4096*Computation Rate = 4096*10000 = 4.096*10^7$ MAC operations per second.

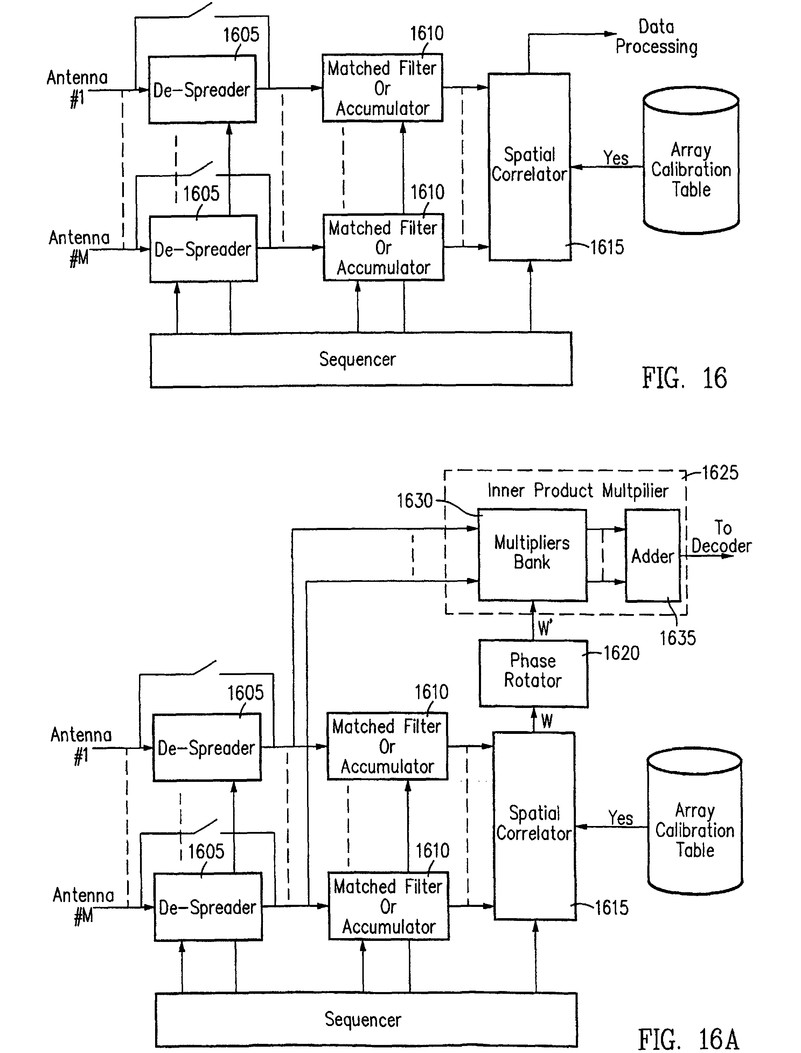

Fig. 16 shows an embodiment of a generalized CDMA AOA/MAG (magnitude of $\Omega$) estimator. In Fig. 16, a single "finger" (demodulation channel) of a Manifold Assisted Spatial Demodulator suitable for IS-95 (A,B, or C), cdma2000, and W-CDMA/UTRAN proposals is shown. In this embodiment, the de-spreading mechanism can follow W-CDMA (NTT/DOCOMO) and UTRAN (ETSI/SMG) proposals to ITU, which are proposals in response to the ITU 3rd Generation cellular IMT-2000 initiative. The main difference relative to the current IS-95 (A and B) standard is the existence of a pilot signal in the reverse link. The IS-95C and cdma2000 proposal employ a continuous pilot signal, while W-CDMA employs evenly spaced short bursts of a pilot signal. Details of the reverse link structure are given in the CDG cdma2000 and ETSI/SMG & NTT DOCOMO W-CDMA UTRAN/ARIB proposal submitted to the ITU on June 1998.

I and Q components of a received signal are fed into an antenna array with M elements. The M antenna element outputs are down-converted to a base band frequency and digitized. The M signals are then de-spread along M parallel channels, such as above. For W-CDMA, the de-spreading blocks 1605 can be bypassed for the initial mobile station access phase. When W-CDMA's mobile station's timing has been established, the de-spreading blocks can be used for de-scrambling. For cdma2000, the de-spreaders 1605 are used as suggested in the CDG proposal (accommodating long and short codes). The proposal to the ITU, mentioned above, provides additional details about the de-spreading.

The next stage, at the output of the de-spreader blocks 1605, comprises a bank of M matched filters 1610 for W-CDMA or IS-95 or a bank of M accumulators 1610 for cdma2000. The matched filters are gated to allow for a non-continuous pilot signal as proposed by W-CDMA and UTRAN, i.e., utilizing matched filters for the 256 bit sequence and scrambling code combined, as suggested by UTRAN and W-CDMA. The matched filters correlate the incoming signal sequence with a pre-stored sequence. The outputs of the matched filters are fed into a spatial correlator 1615 for determining the best fit in the array manifold matrix using the operation

$$\Omega = V^H \cdot A$$

as explained above.

It should be noted that the time of signal arrival can vary and needs to be tracked. The ability to determine when the matched filter produces a response to the training sequence may be limited due to low signal to noise ratio conditions, requiring repetitive hypothesis (i.e., changing the sampling time). This can be done only after the spatial correlation, which requires the spatial correlation operation to be very fast.

For W-CDMA, a new array response vector group is generated every 0.625 msec. In the case of time distinguishable multipath, several array response vectors may be generated sequentially in this time frame. The time separation depends on the multipath TOA spread. In rich multipath environments, there may be up to L distinguishable multipath elements (e.g., L=3). Since the exact timing and phase of the training sequence cannot be determined before the spatial correlation block ("magnifying glass"), time varying sampling of the matched filter outputs is required (time search) allowing incremental time hypotheses. Each hypothesis requires a spatial correlation process, hence, the spatial correlation process determines the search time to acquire a mobile station. The current spatial correlator design allows up to 200,000 spatial correlation operations per second. For fast fading conditions, the rate of estimation updates for time hypotheses may reach 500,000 times per second (1000 times faster than the maximum Doppler rate). In this case, the number of MAC operations per second is $4096*500000*L = 20.48*10^8*L$ for a 16-element antenna or a 16-valued array response vector and 256 possible angles. If L=3, the number of MAC operations per second is $6.144*10^9$. Utilizing the low bit count algorithm described above, this rate is very feasible using current ASIC technology.

For cdma2000, the outputs of the de-spreaders are grouped together in the accumulators to form an M-valued array response vector, and a search is performed for a single possible symbol in the embedded continuous pilot signal. The time search is similar to searches for IS-95 based systems. Supporting different TOA multipaths can be performed by either utilizing a single searcher (using the same spatial correlator or duplicating the "finger" described in Fig. 15). Figs. 14, 14A, 15, and 16 describe a mechanism to deal with a single time of arrival path. In the case of multiple time of arrival paths, multiple modules are suggested. Rather than just adding additional modules, different embodiments can share some common circuitry to reduce the overall circuit size and cost.

Once estimated AOA data is available, such as from a spatial correlator in Figs. 14, 14A, 15 or 16, the data is processed to enhance receiver performance, which includes three components: 1)beams with sufficient gain must be formed toward the incoming signal, 2) spatial diversity must be provided, and 3) the downlink beam must be constructed.

The data from the demodulator (from Figs. 14, 14A, 15, or 16 above) is collected to form AOA histograms. Since the mobile unit provides a changing wave front (wave front is a linear combination of many incoming wave fronts from many scatterers), a continuous accumulation of AOA samples allows an AOA histogram to build up. This histogram will have "peaks" in the direction of the main scatterers and a distribution that follows the angular spread of the transmission source. A significant advantage of the AOA histogram is the ability to distinguish the peaks even if the transmission is non-continuous (as for IS-95 based CDMA systems). After determining the AOA histogram peaks and variances, beams can be formed in the directions associated with the peaks and with widths that follow the histogram variances. In the case of a single AOA peak, the system can form multiple beams offset in a direction toward the main direction. If the array is large enough, it can be shown that the power from the signals derived from the various beams have a low correlation. This correlation is derived from the inner product of different columns in the array manifold matrix. Exploiting the fact that most CDMA systems use some implementation of RAKE combining, each RAKE channel can be connected to a different beam. This arrangement achieves the first two components mentioned above: gain and diversity.

Another feature of the AOA histogram processing is the ability to estimate the downlink beam, which is the third component mentioned above. Although in FDD systems there is a difference between reverse and forward link frequencies, there is also a good statistical relation. Hence, the forward link beam is formed with a direction and width following the histogram distribution. In the new generation systems, pilot signals can be made available on the forward link, and hence, no specific effort is needed to accommodate phase coherency between the system's main pilot and the forward traffic channel. For IS-95 based systems, such as described above, matched phase beam synthesis is utilized on the forward link.

In another embodiment, shown in Fig. 16A, a phase rotator 1620 and an inner product multiplier 1625, which can be integrated with the demodulator of Fig. 16, further process the result from the spatial correlator 1615. In both IS-95C/cdma2000 and W-CDMA cases, the array response vector (or array response vector group) can be produced by integrating data over time that is limited by the Doppler rate (or a small fraction thereof) to minimize lagging errors. The weight vector and carrier phase (PSK) need to be estimated for demodulation and beam forming. The time to do so is limited by the coherency period which is equal to a small fraction of the Doppler period. The spatial correlator, which enhances the signal to noise ratio, allows a faster determination of these values. The result of the spatial correlation is a pointer to the best-fit column in the array manifold calibration table. The index of the maximum of the resulting correlation matrix $\Omega$ is the pointer. The phase of the maximum value (selected as part of the spatial correlator process) is the carrier rotation phase. The selected column (W) in the array manifold matrix, which contains the maximum valued element of the matrix, from the spatial correlator 1615 is fed into phase rotator 1620 to shift column W. The shifting is done by multiplying W by $e^{j\emptyset}$, where the phase $\emptyset$ is the argument of the maximum value selected from the spatial correlator resultant vector $\Omega$:

$$\Omega = V^H \cdot A$$

The shifted column, W', is then fed into a multipliers bank module 1630 of inner product multiplier 1625. The inner product multiplier, which also includes an adder circuit 1635, performs a typical beam forming operation with a difference being that the weight vector W' has been phase adjusted to the incoming signal array response vector to maximize PSK (phase shift keying) demodulation results. The multipliers bank module performs the following operation for beam forming:

Conjugate(Selected column from A shifted by $\emptyset$

$(W*e^{j\emptyset}))^T$ * array response vector.

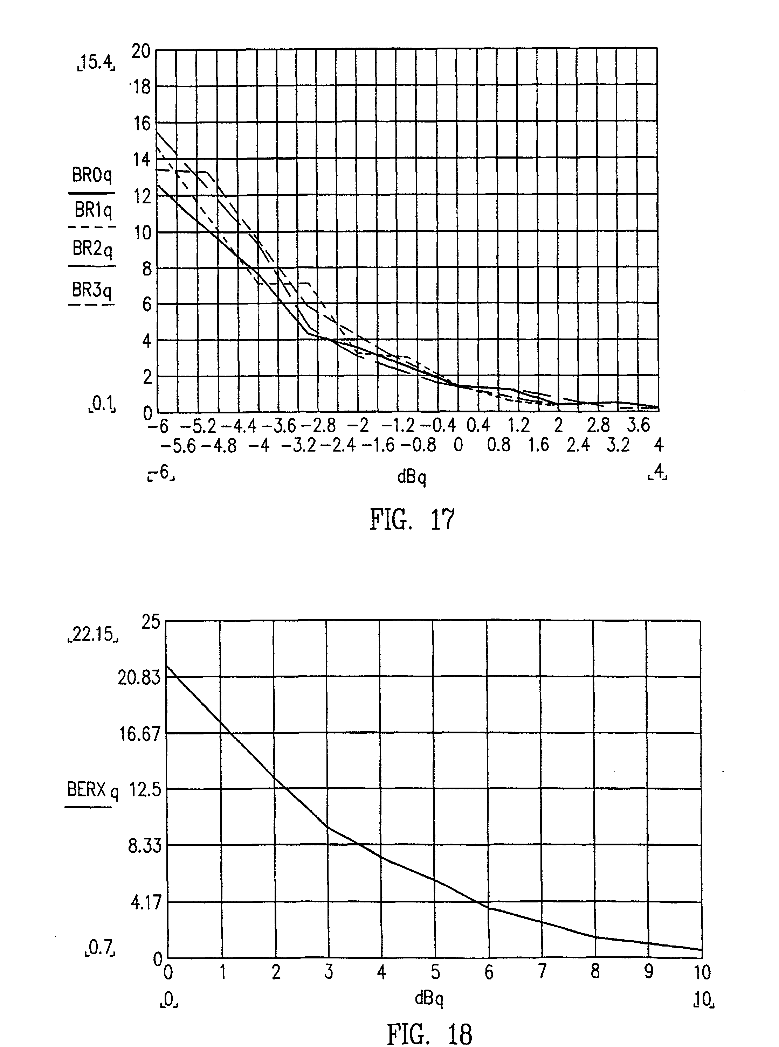

The efficiency of this demodulation process depends on various factors, such as the accuracy of the array manifold calibration matrix selection (i.e., AOA estimation), the accuracy of the rotation phase estimation, the amount of angular spread, and the SIR. Figs. 17 and 18 show a performance comparison between a standard two element diversity array and the MAD system described above for same signal fading conditions. Fig. 17 shows results using a QPSK (Quadrature Phase Shift Keying) MAD in random fading. Fig. 18 shows the same results of the same fading conditions as in Fig. 17, but with a standard QPSK demodulator. The simulation results show an average improvement of approximately 6 to 8 dB for the MAD based system.

For a typical base station, the number of simultaneous mobile station sessions may reach 100 or more, which would require multiplying the number of MAC operations per second mentioned above by 100 and more. The ability to reduce the number of bits in the process allows for practical ASIC implementation. Each voice or data channel is equipped with a spatial correlator that executes the above-described operation. The result is a spatially enhanced demodulator, i.e., for each received symbol, the system searches for the best way to coherently combine the output of all the antenna ports.

The effectiveness of this spatially enhanced demodulation grows as the mobile unit gets farther away from the base station because the greater the distance, the smaller the multipath angular spread, and hence, the array response vector lies closer to the array manifold. As the array response vector gets nearer to the array manifold, the accuracy of the signal AOA and magnitude estimation increases due to the smaller multipath angular spread. Assuming a uniform distribution of mobile units across the network, most mobile units are at the outer regions of the cellular cell. In addition, the farther the mobile unit is from the base station, the harder the communication is to maintain. Since distant subscribers are harder to maintain communication with, solutions directed to distant subscribers are a higher priority. Thus, accuracy degradation and reduction of demodulator efficiency at close proximity to base station is tolerable.

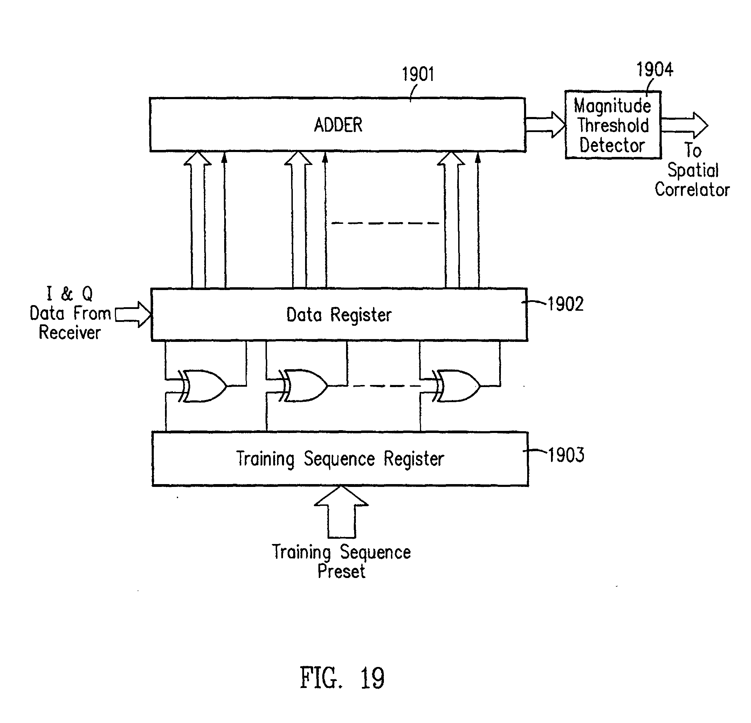

Fig. 19 presents an embodiment illustrating a training sequence convolver, which may be used instead of the de-spreader 102 and FHT 103 in some wireless standards. A data register 1902 is a first-in-first-out (FIFO) unit with a word bandwidth that is matched to the receiver I and Q output width. The I and Q samples are shifted through the data register 1902 in two's complement format. XOR gates are used to compare the most significant bit of I and the most significant bit of Q with bits of a training sequence stored in a training sequence register 1903. The resultant XOR output are fed to an adder 1901 and used to determine whether to add or subtract each I and Q sample in the data register. The output of the adder is updated for every sample cycle and compared against a threshold in a magnitude threshold detector 1904. When the threshold is exceeded, the I and Q values are registered as a component of the signal response vector that is then sent to the spatial correlator explained above.

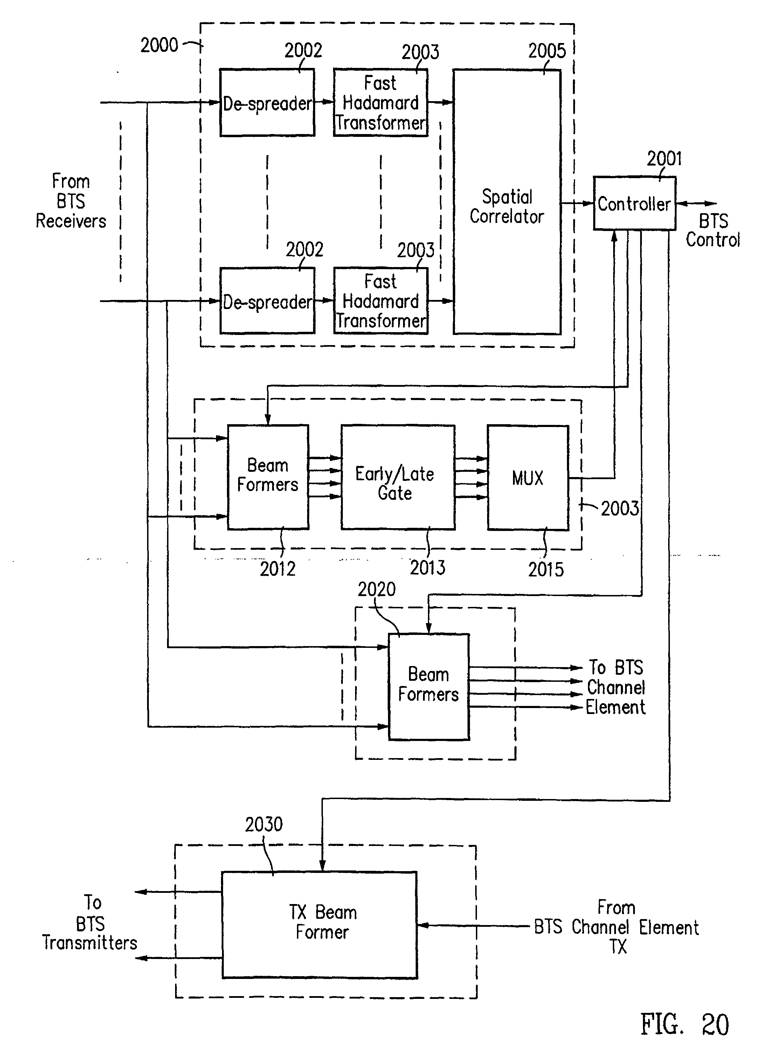

Fig. 20 presents an embodiment of the invention that includes both searching and tracking functions (in angle and time). The addition of angular tracking increases the ability of the system to efficiently direct the receiving beams at all times. A searcher 2000 acquires new multipath parts as before while a tracker 2003 tracks them. The principle of operation of this embodiment is very similar to the embodiment described in Fig. 1. The main difference relative to Fig. 1 is the addition of the tracker 2003. The N receiver outputs are fed in parallel to beamformer 2012. The controller 2001 downloads to the beamformer 2012 not just one, but two beam-forming information sets for each signal part to be tracked. The two sets correspond to two adjacent columns in the calibration matrix. This allows the beamformer to continuously "toggle" between two angularly adjacent beams.

The beamformer output is fed into an "Early/late gate" module 2013 known in the art. The result of the combined "toggling" beamformer and the "Early/late gate" is in the form of four level values corresponding to: left beam/ early time, right beam/early time, left beam/late time and left beam/late time. Since the tracker is designed to track four multipath parts simultaneously, the results are reported to the controller through a multiplexer 2015. The controller 2001 directs the beamformer and the "Early/late gate" to balance all the four values above the same level by exchanging the beamformer coefficients and advancing/delaying the gate's clock. Angular tracking is achieved by equalizing the right and left associated results while the time tracking is achieved by equalizing the early late associated values. This embodiment assures sufficient integration for reliable tracking. The sets of coefficients are entirely replaced when the searcher finds a multipath part that generates significant higher level outputs than the ones tracked. In this embodiment, each channel is assigned its own downlink beamformer 2030. Note also that this embodiment supports an individual beam for each active channel.

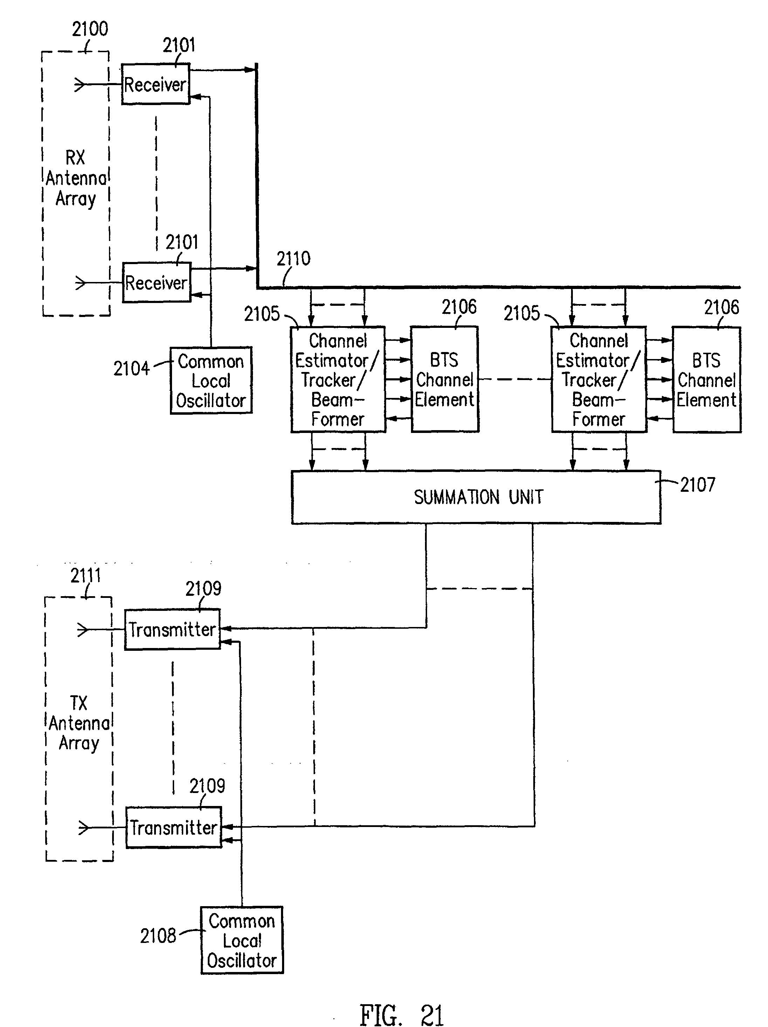

Fig. 21 presents an overview of a base station that employs channel estimators/trackers/beamformers described in Fig. 20. The antenna array 2100 is coupled to a set of receivers 2101 which are all driven by common local oscillator 2104, as in Fig. 1. The receiver outputs are placed on a data bus 2110 to feed a plurality of channel estimators/ trackers/beamformers 2105, each of which provides a BTS channel element 2106 with a plurality of signal parts. Element 2106 can be a RAKE receiver/data transmitter of IS-95. The channel elements are feeding downlink data to the channel estimator/tracker/beamformers, which feed beam-formed data to summation unit 2107. The summation unit outputs summed beam-formed data to the BTS transmitters 2109 that are driven by common local oscillator 2108. The transmitter outputs are radiated through transmitting antenna array 2111.

The above embodiment of the downlink requires additional "pilots" when applied to a CDMA IS-95 base station. This may require some changes in the network control and network pilots allocation design. The following embodiment alleviates this requirement by distributing the overhead channels (pilot, paging and synchronization) through a wide beam while the traffic channels are individually transmitted through narrow beams directed at the associated mobile units. This approach does not change the conventional BTS softer hand-off profile, hence it does not require any changes in the network architecture.

This proposed arrangement is facilitated by careful array beam synthesis techniques that are well known in the art. In particular, the beams are constructed to be phase matched in the mobile unit's scattering region. The beams' coefficients are calculated to achieve identical wave-fronts between the pilot and the traffic signals, hence, allowing the current IS-95 coherent demodulation at the mobile unit. This "beam matching" is facilitated using beam synthesis based on a minimum root mean square approach. This approach allows for +/- 10 degrees phase matching down to -10 dB points, which is sufficient not to degrade the performance of the coherent demodulator at the mobile unit.

The coefficients of the individual downlink beams are set as follows: the overhead data (pilot, synch and paging) are transmitted through fixed, relatively wide beams. The downlink traffic data beams are set to match the line of bearing as measured by the uplink channel estimator with sufficient width margin to compensate for bearing error (due to lack of correlation between up and down links). It should be noted that even relatively wide downlink traffic beams will provide for significant capacity increase.

Since the angular spread is getting larger as the distance to the base station decreases, the narrow beam width is estimated based on the estimated distance from the BTS. This distance is derived from the time delay as measured by a beam director.

Since the above approach is based on the statistical profile of the scattering region (various scattering models are considered), the system must provide for exceptions: at first, the allocated traffic narrow beam is made wider than needed, and as done with the forward power control, it is gradually narrowed based on the frame erasure rate (analogous to bit error rate) that is reported on the uplink. In case the frame erasure rate increases, the traffic beam is widened accordingly. This mechanism will also compensate for situations where the uplink angle of arrival (AOA) is very different from the downlink AOA.

While the above embodiments describe utilizing the present invention for current CDMA communication systems, the concepts of the present invention can also be used in wide band CDMA (W-CDMA) communication systems to increase system capacity. More specifically, a W-CDMA system utilizes a plurality of antennas arranged in wide aperture array and digital signal processing to estimate multipath angle of arrival (AOA) and time of arrival (TOA), thereby allowing the assignment of multi-antenna beams towards the incoming signal parts and the assignment of adjustable downlink beams to increase system capacity. Even though the specifications for W-CDMA are not yet clearly defined, there are already specific principles, such as the existence of a pilot signal in the uplink, that are accepted (e. g., part of IS-665 and J-STD-015) with regard to W-CDMA that can be exploited to provide for efficient adaptive antenna array technology implementation.

To provide for capacity enhancement of W-CDMA communication systems, the following features are proposed: uplink channel estimation, beam-forming for uplink to provide for enhanced antenna array gain, spatial directivity and fading mitigation (through diversity), and beam-forming for downlink for enhanced array gain and spatial directivity, which will be discussed in order below.

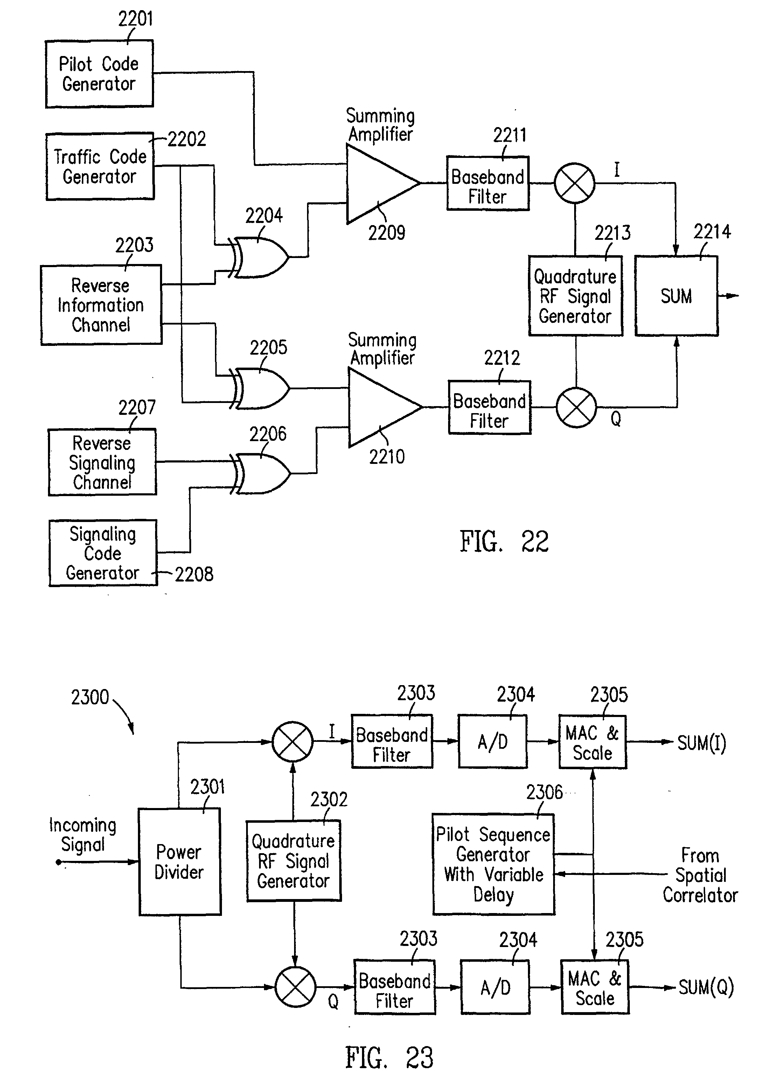

As previously discussed, signal de-spreading and fast Hadamard transformers (FHT) can be used to estimate the array response vector (electrical amplitude and phase for all array elements) of an IS-95 based CDMA signal to provide for multipath AOA values determination through spatial correlation. However, the existence of a pilot in the uplink for a W-CDMA system, which is a basic difference between W-CDMA and IS-95 based CDMA systems, can be utilized to determine the array response vector and channel impulse response (CIR) for determining AOA and TOA values for uplink channel estimation. Fig. 22 shows a possible implementation of W-CDMA uplink traffic channel, which is defined and described in the CDG cdma2000 proposal submitted to the ITU on June 1998, incorporated above.

The presence of pilot data in the uplink allows the estimation of the array response vector as for training sequences. A regular W-CDMA receiver synchronizes its demodulator to the incoming W-CDMA signal by hypothesizing on the periods of the pilot data streams. Each hypothesis consists of accumulating k number of incoming signal samples and multiplying the samples by k number of internally generated replicas of pilot samples (i.e., the inner product between the incoming signal and the generated replica signal). The pilot's replica sequence is delayed for each subsequent hypothesis and the correlation process repeats. When the replica of the pilot is synchronized with the incoming signal, the resulting I and Q magnitudes are maximized to indicate "lock" conditions. Continuing the above accumulation process, accurate pilot, and hence, carrier phase can be determined.

Since the pilot part to the incoming signal exists all the time, the integration period is limited only by the movement of the mobile unit (Doppler shifts) and the inaccuracy of the carrier frequency used at the receiver demodulator. Because for a typical mobile unit speed, the doppler shift is less than 100 Hz, and the frequency error is usually in the order of hundred hertz, the integration period could span over several milliseconds, which is typically far longer than a symbol duration. This mechanism is similar to demodulation in the IS-95 downlink, described above.

Using the pilot correlation process described above, the carrier relative electrical phase can be estimated using a phase estimator 2300 as shown in Fig. 23. The incoming signal from the mobile unit is divided into two branches by a power divider 2301 and multiplied by a signal generated from a quadrature RF signal generator 2302 to produce I and Q signals. After each signal is passed through a baseband filter 2303 and analog-to-digital (A/D) converter 2304 for baseband filtering and digitizing, respectively, the I and Q sample streams are fed into multiply-and-accumulate (MAC) and scale circuitry 2305. A delayed pilot code sequence, as described above, from a pilot sequence generator with variable delay circuit 2306 is multiplied with the I and Q sample streams from A/D converter 2304, summed, and scaled to produce SUM(I) and SUM(Q) quantities, which represent a single element within the array response vector. If the delayed pilot code sequence differs by more than one chip duration from the incoming signal sequence, the SUM(I) and SUM(Q) values are small (following the auto-correlation function of the pilot sequence). Hence, the phase estimator can be used as a Channel Impulse Response (CIR) estimator by varying the delay values from the pilot sequence generator 2306 over the expected range of incoming signal TOAs.

The CIR is essential to accurately determine the signal multipath AOA and TOA values. The existence of pilot signal in the uplink can be used to determine the CIR. As discussed above, SUM(I) and SUM(Q) output magnitudes depend on the time difference between the incoming signal and the internally generated pilot replica sequence. A conventional searcher (in a RAKE receiver) varies the delay of the internally generated pilot sequence while evaluating the square of the sum of SUM(I) and SUM(Q) (i.e., $[SUM(I)+SUM(Q)]^2$) to measure the CIR.

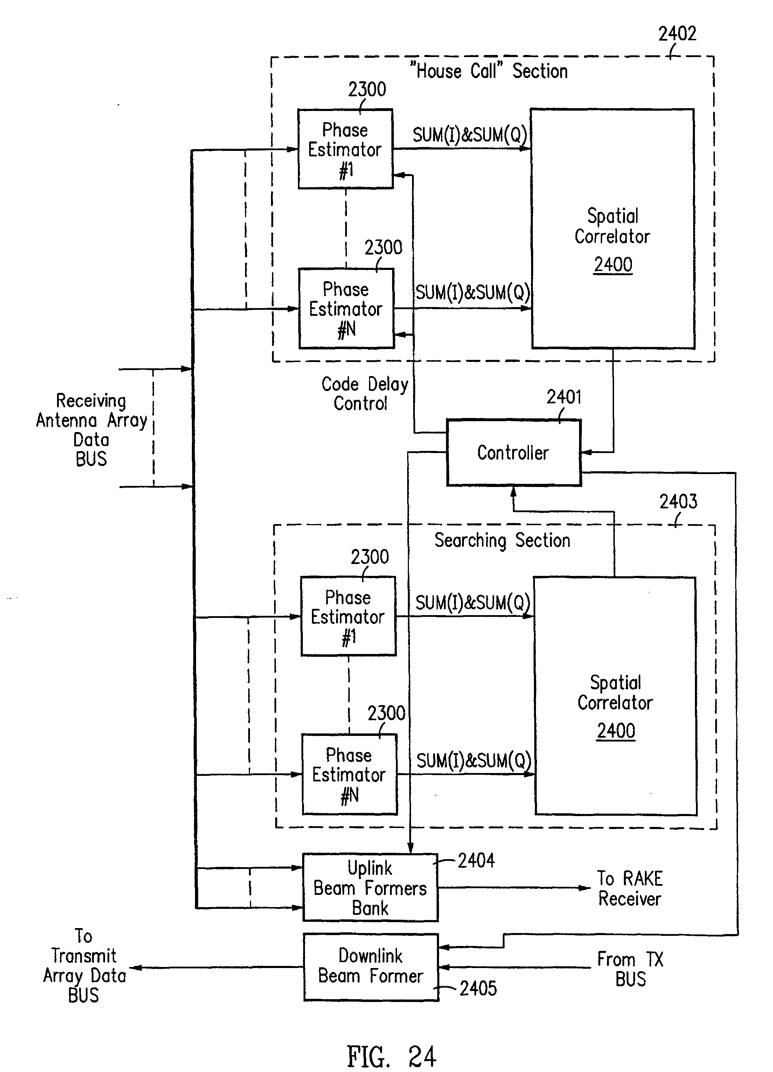

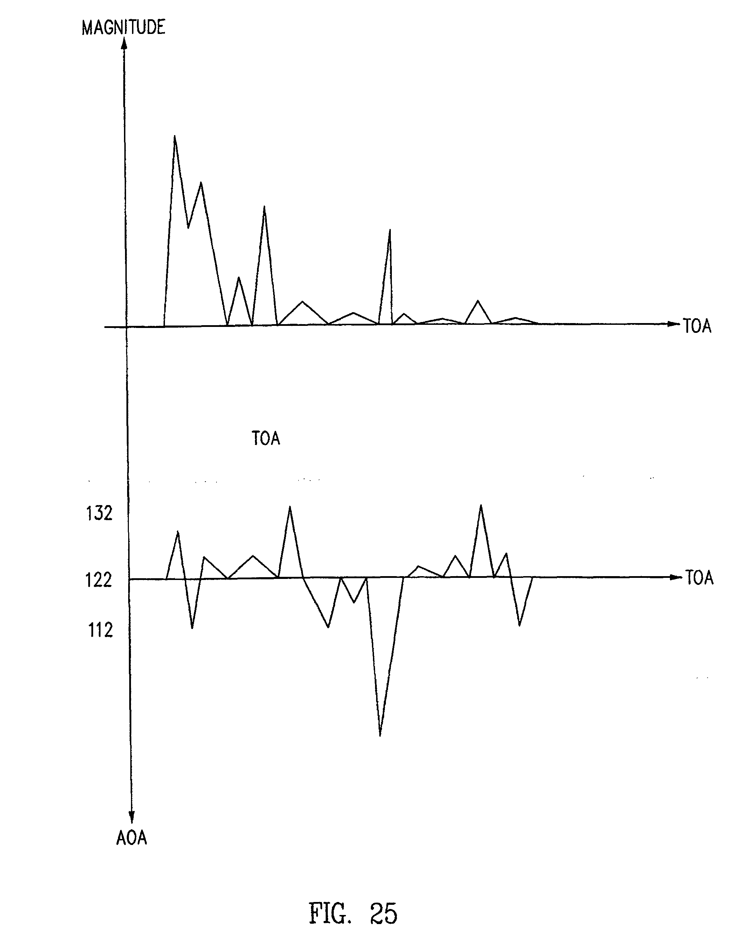

Fig. 24 shows a system (W-CDMA BeamDirector™) for enhancing the normal search process utilizing spatial correlation as described earlier. Signals from antenna elements in the receiving antenna array are processed in dual banks of N phase estimators, such as phase estimators 2300 in Fig. 23, to generate SUM(I) and SUM(Q) signal components. Each set of N SUM(I) and SUM(Q) components is correlated with an antenna array calibration matrix by a spatial correlator 2400 to produce a correlation matrix that represents the correlations of the signal received at the antenna array with both a set of predetermined directions and a set of predetermined symbols, such as discussed above with Fig. 4. The results of the spatial correlator are read by a controller 2401 to produce the CIR data (both magnitude and AOA data). Fig. 25 shows an example of the CIR data as functions of time of arrival.

The controller 2401 analyzes the CIR data to determine which TOA values are to be used by a "House Call" section 2402 containing the first bank of phase estimators and a spatial correlator. The "House Call" section 2402 is very similar to a searching section 2403, which contains the other bank of phase estimators and a spatial corrrelator. However, the "House Call" section dwells on the TOA values that were determined from the CIR data as multipath TOA values. This mechanism allows for a high success-to-attempt ratio in measuring AOA data for the incoming multipath parts.

The angle/time of arrival estimation described above allows for both single scattering zone and multi-scattering zones handling. Angular spread can be determined in real time by way of histogram processing of angle of arrival samples. When fading is produced by a large scattering zone, the angle of arrival results (AOA samples) are distributed with large variation (can be estimated by the variance of AOA results). The main AOA, however, can be estimated by the histogram center of gravity. The histogram center of gravity is determined by "smoothing" the histogram through a low pass filter (e.g., Hamming, Raised Cosine, etc.) and finding the maximum point of the "smoothed" histogram. The multipath scattering area size can then be estimated by comparing the "smoothed" histogram peak value to the histogram data distribution. When more than one scattering zone exists, thereby causing multiple "peaks" in the CIR data, a separate histogram process is performed for each significant "peak" associated with TOA value in the CIR.

The estimated AOA values along with scattering zone sizes (sectorial angle) are then used to determine the coefficients of the uplink beamformers bank 2404 that feeds the uplink RAKE receiver. Since the number of RAKE receiver "fingers" is limited, the assignment of uplink beams is optimized to maximize the RAKE combining efficiency. For example, if only a single scattering zone is identified, all beams are arranged to evenly cover the identified scattering zone. If multiple scattering zones are identified, the beams are allocated to assure first that all distinct scattering zones are covered, and then the remaining available beams are added to provide diversity within the more dominant scattering zones. Coefficients for the downlink beamformer 2405 that go to the transmit antenna array can also be determined using CIR data from the controller following the same downlink principles discussed above. The beam width is determined from the uplink multipath distribution, and the beam coefficients are set to assure illumination of the scattering zone as determined by the multipath distribution.

As is evident from the various embodiments illustrated above, the present invention encompasses within its scope many variations. Those skilled in the art will appreciate that additional modifications may also be made to the above embodiments without departing from the scope of the invention. Accordingly, the true scope of the present invention should not be construed as limited by the details provided above for the purposes of illustration, but should be determined from the following claims.

**Claims**

**1.** A method for wireless communication comprising:

transmitting from a mobile unit a code modulated signal obtained by modulating original symbols by a predetermined pseudo-noise sequence, wherein the original symbols represent an original information signal:

receiving at a base station antenns array N complex valued signal sequences received in parallel from N corresponding antenna elements to yield a set of N received signals;
spatially correlating collectively the N received signals with a set of complex array calibration vectors to obtain spatial information about the mobile unit, wherein each array calibration vector represents a response of the antenna array to a calibration signal originating in a predetermined direction relative to the base station; and
spatially filtering a subsequent set of N complex valued signal sequences received from the mobile unit in accordance with the spatial information to obtain corresponding transmitted information signals.

**2.** The method of claim 1 further comprising tracking time and angle information of signal components from said set of N received signals.

**3.** The method of claim 1 wherein the original symbols are selected from a symbol alphabet comprising not more than 64 symbols.

**4.** The method of claim 32 wherein each of the N transformer outputs comprises a vector having M complex valued components representing correlations between a received symbol and M symbols of a symbol alphabet.

**5.** The method of claim 32 wherein the calibration vectors comprise complex-valued components having 1-bit-plus-sign real part and 1-bit-plus-sign imaginary part, and wherein the correlating comprises computing via addition only a vector dot product between the calibration vectors and the N transformer outputs.

**6.** The method of claim 1 wherein the correlating yields spatial information about multiple signal components having a time spread less than one chip.

7. The method of claim 1 further comprising spatially filtering a downlink information signal in accordance with the spatial information about multiple signal components, and transmitting the spatially filtered downlink information signal from the antenna array to the mobile unit.

8. The method of claim 7 wherein the spatially filtering comprises assigning the mobile unit to a calculated beam and generating the beam.

9. The method of claim 1, further comprising:

> calculating transforms of the symbols as received from the N antenna elements of the antenna array, wherein the calculation produces N M- dimensional vectors having complex-valued components, where M is a number of predetermined symbols in a symbol alphabet, thereby producing a matrix B containing N row vectors of dimension M, and wherein the spatially correlating comprises calculating the matrix product $C=A^H B$, where each of L columns of the matrix A is an N-dimensional vector containing a response of the N antenna array in one of L predetermined directions relative to the array; and
> determining from the matrix C, a spatial direction of a signal part originating from the mobile unit.

10. The method of claim 9 wherein the matrix A has complex valued elements having 1-bit-plus-sign real part and 1-bit-plus-sign imaginary part, whereby the matrix product calculation is efficiently performed.

11. The method of claim 9 further comprising determining from the matrix C en additional spatial direction of an small time separated signal part originating from the mobile unit.

12. The method of claim 1 wherein the receiving comprises digitizing, de-spreading and Hadamard transforming, separately and in parallel, N air signals coupled to the N antenna elements.

13. The method of claim 1 wherein the spatial correlating comprises calculating vector dot products between the N received signals and columns of an array calibration table, formed from the array calibration vectors, having complex-valued elements in the form of a bit-plus-sign real part and a bit-plus-sign imaginary part.

14. The method of claim 1 further comprising assigning the mobile unit to a calculated downlink beam based on the spatial information.

15. The method of claim 14 wherein the calculated beam is selected from among a dynamically adaptive set of overlapping downlink beams of differing angular extent.

16. The method of claim 14 wherein the assigning is further based upon distance information such that close mobile units are assigned to broad beams and distant mobile units are assigned to narrow beams.

17. A CDMA base station comprising an antenna array (10) comprising N antenna elements; a set of N receivers (101) coupled to the N antenna elements to produce N incoming signals; a set of N de-spreaders (102) coupled to the N receivers (101), wherein the de-spreaders (102) produce from the N incoming signals N de-spread signals corresponding to a single mobile unit; a set of N symbol transformers (103) coupled to the N de-spreaders (102), wherein the transformers (103) produce complex-valued outputs from the de-spread signals; the base station further comprising:

> a spatial correlator (105) coupled to the N symbol transformers (103), wherein the correlator (105) correlates the complex-valued outputs with stored complex calibration vectors to produce beam forming information for multiple signal parts associated with the mobile unit;
> wherein each array calibration vector represents a response of the antenna array to a calibration signal originating in a predetermined direction relative to the base station.
> a receiving beamformer (112) coupled to the spatial correlator (105) and to the N receivers (101), wherein the receiving beamformer (112) spatially filters the N incoming signals in accordance with the beam forming information; and
> a RAKE receiver (113) coupled to the receiving beamformer (112), wherein the RAKE receiver (113) produces from the spatially filtered signals an information signal.

18. The base station of claim 17 further comprising a transmitting beamformer (117) coupled to the spatial correlator (105), wherein the transmitting beamformer (117) generates spatial beams in accordance with the beam forming information.

19. The base station of claim 18 wherein the spatial beams are selected from a set of calculated beams comprising narrow beams and overlapping broad beams, where the narrow beams are phase matched to the overlapping wide beams.

20. The base station of claim 17 further comprising a tracker coupled to the spatial correlator and to the receiving beamformer, wherein the tracker tracks the multiple signal parts and optimizes the performance of the receiving beamformer.

21. The base station of claim 17 wherein each array calibration vector comprises complex valued array response elements represented as bit-plus-sign imaginary parts and bit-plus-sign real parts.

22. The method of claim 1 wherein the calibration vectors comprise complex-valued components having 2-bit-plus-sign real part and 2-bit-plus-sign imaginary part, and wherein the correlating comprises computing via addition only a vector dot product between the calibration vectors and the N transformer outputs.

23. The method of claim 1, further comprising code multiplexing a pilot signal into the code modulated signal.

24. The method of claim 23 further comprising correlating the pilot signal with delayed pilot signals generated by the base station.

25. The method of claim 24 further comprising forming angle of arrival and time of arrival histograms using the correlation data to form uplink and downlink beams directed to a desired scattering zone.

26. The method of claim 9, further composing inserting a sounding signal into transmission and receiving channels.

27. The method of claim 26 further comprising multiplying signals from the transmission and receiving channels with the sounding signal to produce a compensation vector.

28. The method of claim 27 further comprising adjusting the matrix A using the compensation vector for amplitude and phase compensation.

29. The method of claim 1, further comprising calculating the marrix product $\Omega = V^H A$, wherein A is the array manifold matrix and V is the array response vector, and utilizing entries in the matrix $\Omega$ to form an angle of arrival histogram.

30. The method of claim 29 further comprising using peak and variance information from the histogram to form beams with desired width and direction.

31. The method of claim 29 comprising using the matrix $\Omega$ at longer communication distances with smaller angular spread.

32. The method of claim 1, wherein said set of N received signals are N transformer outputs formed comprising:

   correlating in parallel each of the N signal sequences with the pseudo-noise sequence to select N received signals comprising N received symbols corresponding to a common one of the original symbols; and transforming in parallel the N received symbols to obtain said N transformer outputs.

33. The method of claim 32. further comprising repeating said receiving, correlating, transforming and spatially correlating steps prior to said spatially filtering step..

34. The method of claim 33 further comprising demodulating the spatially filtered subsequent set to obtain a symbol from the original information signal.

35. The method of claim 32 further comprising forming multiple narrow beams in a wide aperture antenna array, wherein said narrow beams cover a desired scattering zone.

**36.** The method of claim 35 wherein the number of the narrow beams is two to four.

**37.** The method of claim 35 wherein the width of the narrow beams ranges from 2 to 3 degrees.

**Patentansprüche**

**1.** Verfahren zur drahtlosen Kommunikation, umfassend die folgenden Schritte:

Übertragen eines code-modulierten Signals, das durch Modulieren von Ursprungssymbolen mit einer vorbestimmten Pseudo-Rauschsequenz erhalten wurde, von einer mobilen Einheit, wobei die Ursprungssymbole ein Ursprungsinformationssignal repräsentieren;

Empfangen von N Komplexwert-Signalsequenzen an einem Basisstations-Strahlerfeld, die parallel von N entsprechenden Antennenelementen empfangen wurden, so dass ein Satz von N empfangenen Signalen erhalten wird;

räumliches Korrelieren der N empfangenen Signale kollektiv mit einem Satz von komplexen Feldkalibrierungsvektoren, um räumliche Informationen über die mobile Einheit zu erhalten, wobei jeder Feldkalibrierungsvektor eine Antwort des Strahlerfeldes auf ein Kalibrierungssignal repräsentiert, das aus einer vorbestimmten Richtung relativ zur Basisstation kommt; und

räumliches Filtern eines nachfolgendes Satzes von N Komplexwert-Signalsequenzen, die von der mobilen Einheit gemäß den räumlichen Informationen erhalten wurden, um entsprechende übertragene Informationssignale zu erhalten.

**2.** Verfahren nach Anspruch 1, ferner umfassend das Verfolgen von Zeit- und Winkelinformationen von Signalkomponenten von dem genannten Satz von N empfangenen Signalen.

**3.** Verfahren nach Anspruch 1, bei dem die Ursprungssymbole aus einem Symbolalphabet ausgewählt werden, dass nicht mehr als 64 Symbole umfasst.

**4.** Verfahren nach Anspruch 32, bei dem jeder der N Transformatorausgänge einen Vektor mit M Komplexwert-Komponenten umfasst, die Korrelationen zwischen einem empfangenen Symbol und M Symbolen eines Symbolalphabets repräsentieren.

**5.** Verfahren nach Anspruch 32, bei dem die Kalibrierungsvektoren Komplexwert-Komponenten mit einem realen 1-Bit-Plus-Vorzeichen-Teil und einem imaginären 1-Bit-Plus-Vorzeichen-Teil umfassen, und wobei das Korrelieren das Errechnen, per Addition, nur eines Vektorpunktprodukts zwischen den Kalibrierungsvektoren und den N Transformatorausgängen umfasst.

**6.** Verfahren nach Anspruch 1, bei dem das Korrelieren räumliche Informationen über mehrere Signalkomponenten mit einer Zeitverteilung von weniger als einem Chip ergibt.

**7.** Verfahren nach Anspruch 1, ferner umfassend das räumliche Filtern eines Abwärtsstreckeninformationssignals gemäß der räumlichen Information über mehrere Signalkomponenten und das Übertragen des räumlichen gefilterten Abwärtsstreckeninformationssignals von dem Strahlerfeld zu der mobilen Einheit.

**8.** Verfahren nach Anspruch 7, wobei das räumliche Filtern das Zuweisen der mobilen Einheit zu einem errechneten Strahl und das Erzeugen des Strahls umfasst.

**9.** Verfahren nach Anspruch 1, ferner umfassend die folgenden Schritte:

Berechnen von Transformierten der Symbole gemäß Empfang von den N Antennenelementen des Strahlerfeldes, wobei die Berechnung N M-dimensionale Vektoren mit Komplexwert-Komponenten hat, wobei M eine Zahl von vorbestimmten Symbolen in einem Symbolalphabet ist, um so eine Matrix B zu erzeugen, die N Reihenvektoren von Dimension M enthält; und wobei das räumliche Korrelieren das Berechnen des Matrixproduktes $C = A^H B$ umfasst, wobei jede der L Spalten der Matrix A ein N-dimensionaler Vektor ist, der eine Antwort des N Strahlerfelds in einer von L vorbestimmten Richtungen relativ zu dem Feld enthält; und

Ermitteln einer räumlichen Richtung eines von der mobilen Einheit stammenden Signalteils aus der Matrix C.

10. Verfahren nach Anspruch 9, bei dem die Matrix A Komplexwert-Elemente mit einem realen 1-Bit-plus-Vorzeichen-Teil und einem imaginären 1-Bit-plus-Vorzeichen-Teil hat, so dass die Matrixproduktberechnung auf effiziente Weise durchgeführt wird.

11. Verfahren nach Anspruch 9, ferner umfassend das Ermitteln einer zusätzlichen räumlichen Richtung eines von der mobilen Einheit stammenden kleinen zeitlich getrennten Signalteils von der Matrix C.

12. Verfahren nach Anspruch 1, bei dem das Empfangen das Digitalisieren, Konzentrieren und Hadamard-Transformieren, separat und parallel, von mit den N Antennenelementen gekoppelten N Luftsignalen umfasst.

13. Verfahren nach Anspruch 1, bei dem das räumliche Korrelieren das Berechnen von Vektorpunktprodukten zwischen den N empfangenen Signalen und Spalten einer Feldkalibrierungstabelle umfasst, die von den Feldkalibrierungsvektoren gebildet wurden, mit Komplexwert-Elementen in der Form eines realen Bit-plus-Vorzeichen-Teils und eines imaginären Bit-plus-Vorzeichen-Teils.

14. Verfahren nach Anspruch 1, ferner umfassend das Zuweisen der mobilen Einheit zu einem berechneten Abwärtsstreckenstrahl auf der Basis der räumlichen Informationen.

15. Verfahren nach Anspruch 14, bei dem der berechnete Strahl aus einem dynamisch adaptiven Satz von überlappenden Abwärtsstreckenstrahlen mit unterschiedlichem Winkelausmaß ausgewählt wird.

16. Verfahren nach Anspruch 14, bei dem das Zuweisen ferner auf Entfernungsinformationen basiert, so dass nahe mobile Einheiten breiten Strahlen zugewiesen werden und ferne mobile Einheiten engen Strahlen zugewiesen werden.

17. DCMA-Basisstation, umfassend ein Strahlerfeld (10), das N Antennenelemente umfasst; einen Satz von N Empfängern (101), die mit den N Antennenelementen gekoppelt sind, um N eingehende Signale zu erzeugen; einen Satz von N Konzentratoren (102), die mit den N Empfängern (101) gekoppelt sind, wobei die Konzentratoren (102) aus den N eingehenden Signalen N Konzentrationssignale erzeugen, die einer einzigen mobilen Einheit entsprechen; einen Satz von N Symboltransformatoren (103), die mit den N Konzentratoren (102) gekoppelt sind, wobei die Transformatoren (103) Komplexwert-Ausgänge von den konzentrierten Signalen erzeugen, wobei die Basisstation ferner Folgendes umfasst:

einen räumlichen Korrelator (105), der mit den N Symboltransformatoren (103) gekoppelt ist, wobei der Korrelator (105) die Komplexwert-Ausgänge mit gespeicherten komplexen Kalibrierungsvektoren korreliert, um Strahlformungsinformationen für mehrere, mit der mobilen Einheit assoziierten Signalteile zu erzeugen;

wobei jeder Feldkalibrierungsvektor eine Antwort des Strahlerfeldes auf ein Kalibrierungssignal repräsentiert, das aus einer vorbestimmten Richtung relativ zur Basisstation kommt,
einen Empfangsstrahlformer (112), der mit dem räumlichen Korrelator (105) und mit den N Empfängern (101) gekoppelt ist, wobei der Empfangsstrahlformer (112) die N eingehenden Signale gemäß den Strahlformungsinformationen räumlich filtert; und
einen RAKE-Empfänger (113), der mit dem Empfangsstrahlenformer (112) gekoppelt ist, wobei der RAKE-Empfänger (113) ein Informationssignal von den räumlich gefilterten Signalen erzeugt.

18. Basisstation nach Anspruch 17, ferner umfassend einen Sendestrahlformer (117), der mit dem räumlichen Korrelator (105) gekoppelt ist, wobei der Sendestrahlformer (117) räumliche Strahlen gemäß den Strahlformungsinformationen generiert.

19. Basisstation nach Anspruch 18, wobei die räumlichen Strahlen aus einem Satz von berechneten Strahlen ausgewählt werden können, umfassend enge Strahlen und überlappende breite Strahlen, wobei die engen Strahlen phasenmäßig auf die überlappenden breiten Strahlen abgestimmt sind.

20. Basisstation nach Anspruch 17, ferner umfassend einen Tracker, der mit dem räumlichen Korrelator und dem Empfangsstrahlformer gekoppelt ist, wobei der Tracker die mehreren Signalteile verfolgt und die Leistung des Empfangsstrahlformers optimiert.

21. Basisstation nach Anspruch 17, wobei jeder Feldkalibrierungsvektor Komplexwert-Feldantwortelemente umfasst,

EP 1 062 746 B1

die als imaginäre Bit-plus-Vorzeichen-Teile und reale Bit-plus-Vorzeichen-Teile repräsentiert sind.

22. Verfahren nach Anspruch 1, wobei die Kalibrierungsvektoren Komplexwert-Komponenten mit einem realen 2-Bit-plus-Vorzeichen-Teil und einem imaginären 2-Bit-plus-Vorzeichen-Teil hat, und wobei das Korrelieren das Errechnen, per Addition, nur eines Vektorpunktproduktes zwischen den Kalibrierungsvektoren und den N Transformatorausgängen umfasst.

23. Verfahren nach Anspruch 1, ferner umfassend das Code-Multiplexieren eines Pilotsignals zu dem code-modulierten Signal.

24. Verfahren nach Anspruch 23, ferner umfassend das Korrelieren des Pilotsignals mit verzögerten Pilotsignalen, die von der Basisstation generiert wurden.

25. Verfahren nach Anspruch 24, ferner umfassend das Bilden von Ankunftswinkelund Ankunftszeithistogrammen anhand der Korrelationsdaten zur Bildung von Auf- und Abwärtsstreckenstrahlen, die in eine gewünschte Streuzone gerichtet sind.

26. Verfahren nach Anspruch 9; ferner umfassend das Einfügen eines Resonanzsignals in Sende- und Empfangskanäle.

27. Verfahren nach Anspruch 26, ferner umfassend das Multiplizieren von Signalen von den Sende- und Empfangskanälen mit dem Resonanzsignal zur Erzeugung eines Kompensationsvektors.

28. Verfahren nach Anspruch 27, ferner umfassend das Einstellen der Matrix A mit dem Kompensationsvektor für eine Amplituden- und Phasenkompensation.

29. Verfahren nach Anspruch 1, ferner umfassend das Berechnen des Matrixprodukts $\Omega = V^H A$, wobei A die Feldmannigfaltigkeitsmatrix und V der Feldantwortvektor ist, und Verwenden von Einträgen in der Matrix $\Omega$ zum Bilden eines Ankunftswinkelhistogramms.

30. Verfahren nach Anspruch 29, ferner umfassend die Verwendung von Spitzen- und Varianzinformationen aus dem Histogramm zum Formen von Strahlen mit der gewünschten Breite und Richtung.

31. Verfahren nach Anspruch 29, umfassend die Verwendung der Matrix $\Omega$ bei größeren Kommunikationsentfernungen mit geringerer Winkelausbreitung.

32. Verfahren nach Anspruch 1, bei dem der genannte Satz von N empfangenen Signalen N geformte Transformatorausgänge sind, umfassend die folgenden Schritte:

paralleles Korrelieren jeder der N Signalsequenzen mit der Pseudo-Rauschsequenz auf gewählte N empfangene Signale, umfassend N empfangene Symbole, die einem gemeinsamen einen der Ursprungssymbole entsprechen; und
paralleles Transformieren der N empfangenen Symbole, um N Transformatorausgänge zu erhalten.

33. Verfahren nach Anspruch 32, ferner umfassend das Wiederholen der genannten Schritte des Empfangens, Korrelierens, Transformierens und räumlichen Korrelierens vor dem genannten räumlichen Filterschritt.

34. Verfahren nach Anspruch 33, ferner umfassend das Demodulieren des räumlich gefilterten nachfolgenden Satzes zum Erhalten eines Symbols von dem Ursprungsinformationssignal.

35. Verfahren nach Anspruch 32, ferner umfassend das Formen mehrerer enger Strahlen in einem Strahlerfeld mit breiter Apertur, wobei die genannten engen Strahlen eine gewünschte Streuzone abdecken.

36. Verfahren nach Anspruch 35, bei dem die Anzahl der engen Strahlen zwei bis vier beträgt.

37. Verfahren nach Anspruch 35, bei dem die Breite der engen Strahlen im Bereich von 2 bis 3 Grad liegt.

25

**Revendications**

1. Méthode de communication sans fil comprenant :

   émettre, depuis une unité mobile, un signal modulé en code obtenu en modulant des symboles originaux par une séquence de pseudo-bruit prédéterminée, où les symboles originaux représentent un signal d'information original;
   recevoir au niveau du réseau d'antennes d'une station de base, N séquences de signaux à valeurs complexes, reçues en parallèle de N éléments d'antenne correspondants, afin de donner un jeu de N signaux reçus;
   mettre collectivement en corrélation dans l'espace les N signaux reçus, avec un jeu de vecteurs complexes d'étalonnage de réseau afin d'obtenir des informations spatiales sur l'unité mobile, où chaque vecteur d'étalonnage de réseau représente une réponse du réseau d'antenne à un signal d'étalonnage émanant dans une direction prédéterminée par rapport à la station de base; et
   filtrer dans l'espace un jeu subséquent de N séquences de signaux à valeurs complexes, reçu de l'unité mobile selon les informations spatiales, afin d'obtenir des signaux d'informations émis correspondants.

2. La méthode de la revendication 1, comprenant en outre suivre des informations de temps et d'angle des composants de signaux dudit jeu de N signaux reçu.

3. La méthode de la revendication 1, dans laquelle les symboles originaux sont sélectionnés parmi un alphabet de symboles ne comprenant pas plus de 64 symboles.

4. La méthode de la revendication 32, dans laquelle chacune des N sorties de transformateurs, comprend un vecteur ayant M composants à valeurs complexes représentant des corrélations entre un symbole reçu et M symboles d'un alphabet de symboles.

5. La méthode de la revendication 32, dans laquelle les vecteurs d'étalonnage comprennent des composants à valeurs complexes ayant une partie réelle à 1 bit plus signe et une partie imaginaire à 1 bit plus signe, et où la mise en corrélation comprend calculer par addition, seulement un produit scalaire de vecteurs entre les vecteurs d'étalonnage et les N sorties de transformateurs.

6. La méthode de la revendication 1, dans laquelle la mise en corrélation donne des informations spatiales sur des composants de signaux multiples ayant un étalement dans le temps de moins d'un chip.

7. La méthode de la revendication 1, comprenant en outre filtrer dans l'espace un signal d'information descendant selon les informations spatiales sur des composants de signaux multiples, et émettre le signal d'information descendant filtré dans l'espace, du réseau d'antennes à l'unité mobile.

8. La méthode de la revendication 7, dans laquelle le filtrage dans l'espace comprend affecter l'unité mobile à un faisceau calculé et générer le faisceau.

9. La méthode de la revendication 1, comprenant en outre :

   calculer les transformées des symboles tels que reçus des N éléments d'antenne du réseau d'antennes, où le calcul produit N vecteurs à M dimensions ayant des composants à valeurs complexes, où M est un nombre de symboles prédéterminés dans un alphabet de symboles, produisant ainsi une matrice B contenant N vecteurs-ligne de dimension M, et où la mise en corrélation dans l'espace comprend calculer le produit matriciel $C = A^H B$, où chacune des L colonnes de la matrice A, est un vecteur à dimension N contenant une réponse du réseau de N antennes dans l'une de L directions prédéterminées par rapport au réseau; et
   déterminer, à partir de la matrice C, une direction spatiale d'une partie de signal émanant de l'unité mobile.

10. La méthode de la revendication 9, dans laquelle la matrice A, a des éléments à valeurs complexes ayant une partie réelle à 1 bit plus signe et une partie imaginaire à 1 bit plus signe, en vertu de quoi le calcul du produit matriciel est exécuté de manière efficace.

11. La méthode de la revendication 9, comprenant en outre déterminer à partir de la matrice C, une direction spatiale supplémentaire d'une petite partie de signal séparée dans le temps, émanant de l'unité mobile.

**12.** La méthode de la revendication 1, dans laquelle la réception comprend numériser, désétaler et transformer selon Hadamard, séparément et en parallèle, N signaux aériens couplés aux N éléments d'antenne.

**13.** La méthode de la revendication 1, dans laquelle la mise en corrélation dans l'espace comprend calculer des produits scalaires de vecteurs entre les N signaux reçus et les colonnes d'une table d'étalonnage de réseau, formée des vecteurs d'étalonnage de réseau, ayant des éléments à valeurs complexes sous forme d'une partie réelle à bit plus signe et une partie imaginaire à bit plus signe.

**14.** La méthode de la revendication 1, comprenant en outre affecter l'unité mobile à un faisceau descendant calculé, sur la base des informations spatiales.

**15.** La méthode de la revendication 14, dans laquelle le faisceau calculé est sélectionné parmi un jeu dynamiquement adaptatif de faisceaux descendants superposés d'étendue angulaire différente.

**16.** La méthode de la revendication 14, dans laquelle l'affectation est basée en plus sur des informations de distance de telle sorte que des unités mobiles proches sont affectées à des faisceaux larges et des unités mobiles distantes sont affectées à des faisceaux étroits.

**17.** Station de base CDMA comprenant un réseau d'antennes (10) comprenant N éléments d'antenne; un jeu de N récepteurs (101) couplés aux N éléments d'antenne pour produire N signaux entrants; un jeu de N désétaleurs (102) couplés aux N récepteurs (101), où les désétaleurs (102) produisent, à partir des N signaux entrants, N signaux de désétalement correspondant à une seule unité mobile; un jeu de N transformateurs de symboles (103) couplés aux N désétaleurs (102), où les transformateurs (103) produisent des sorties à valeurs complexes à partir des signaux de désétalement; la station de base comprenant en outre :

un corrélateur spatial (105) couplé aux N transformateurs de symboles (103), où le corrélateur (105) met en corrélation les sorties à valeurs complexes avec des vecteurs complexes d'étalonnage stockés, pour produire des informations de conformation de faisceau pour des parties de signaux multiples associées à l'unité mobile;

où chaque vecteur d'étalonnage de réseau représente une réponse du réseau d'antennes à un signal d'étalonnage émanant dans une direction prédéterminée par rapport à la station de base;
un conformateur de faisceau récepteur (112) couplé au corrélateur spatial (105) et aux N récepteurs (101), où le conformateur de faisceau récepteur (112) filtre dans l'espace les N signaux entrants selon les informations de conformation de faisceau; et
un récepteur RAKE (113) couplé au conformateur de faisceau récepteur (112), où le récepteur RAKE (113) produit un signal d'information à partir des signaux filtrés dans l'espace.

**18.** La station de base de la revendication 17, comprenant un conformateur de faisceau émetteur (117) couplé au corrélateur spatial (105), où le conformateur de faisceau émetteur (117) génère des faisceaux spatiaux selon les informations de conformation de faisceau.

**19.** La station de base de la revendication 18, dans laquelle les faisceaux spatiaux sont sélectionnés parmi un jeu de faisceaux calculés comprenant des faisceaux étroits et des faisceaux larges superposés, où les faisceaux étroits sont assortis en phase aux faisceaux larges superposés.

**20.** La station de base de la revendication 17, comprenant en outre un suiveur couplé au corrélateur spatial et au conformateur de faisceau récepteur, où le suiveur suit les parties de signaux multiples et optimise la performance du conformateur de faisceau récepteur.

**21.** La station de base de la revendication 17, dans laquelle chaque vecteur d'étalonnage de réseau comprend des éléments à valeurs complexes de réponse de réseau, représentés comme des parties imaginaires à bit plus signe et comme des parties réelles à bit plus signe.

**22.** La méthode de la revendication 1, dans laquelle les vecteurs d'étalonnage comprennent des composants à valeurs complexes ayant une partie réelle à 2 bits plus signe et une partie imaginaire à 2 bits plus signe, et où la mise en corrélation comprend calculer, par addition, seulement un produit scalaire de vecteurs entre les vecteurs d'étalonnage et les N sorties de transformateurs.

**23.** La méthode de la revendication 1, comprenant en outre multiplexer en code un signal pilote dans le signal modulé en code.

**24.** La méthode de la revendication 23, comprenant en outre mettre le signal pilote en corrélation avec des signaux pilotes différés générés par la station de base.

**25.** La méthode de la revendication 24, comprenant en outre former des histogrammes d'angle d'arrivée et de temps d'arrivée, en utilisant les données de corrélation, afin de former des faisceaux montants et descendants dirigés vers une zone de diffusion désirée.

**26.** La méthode de la revendication 9, comprenant en outre insérer un signal de sondage dans les canaux d'émission et de réception.

**27.** La méthode de la revendication 26, comprenant en outre multiplier les signaux des canaux d'émission et de réception avec le signal de sondage pour produire un vecteur de compensation.

**28.** La méthode de la revendication 27, comprenant en outre ajuster la matrice A en utilisant le vecteur de compensation, pour la compensation d'amplitude et de phase.

**29.** La méthode de la revendication 1, comprenant en outre calculer le produit matriciel $\Omega = V^H a$, où A est la matrice de variété de réseau, et V est le vecteur de réponse de réseau, et utiliser les entrées dans la matrice $\Omega$ pour former un histogramme d'angle d'arrivée.

**30.** La méthode de la revendication 29, comprenant en outre utiliser des informations de crête et de variance de l'histogramme, pour former des faisceaux avec la largeur et la direction désirées.

**31.** La méthode de la revendication 29, comprenant utiliser la matrice $\Omega$ à de plus longues distances de communication avec un étalement angulaire plus petit.

**32.** La méthode de la revendication 1, dans laquelle ledit jeu de N signaux reçus sont N sorties de transformateurs formées, comprenant :

mettre en corrélation en parallèle chacune des N séquences de signaux avec la séquence de pseudo-bruit, pour sélectionner N signaux reçus comprenant N symboles reçus correspondant à un symbole commun des symboles originaux; et
transformer en parallèle les N symboles reçus pour obtenir lesdites N sorties de transformateurs.

**33.** La méthode de la revendication 32, comprenant en outre répéter lesdites étapes consistant à recevoir, mettre en corrélation, transformer et mettre en corrélation dans l'espace, préalablement à ladite étape de filtrage dans l'espace.

**34.** La méthode de la revendication 33, comprenant en outre démoduler le jeu subséquent filtré dans l'espace pour obtenir un symbole du signal d'information original.

**35.** La méthode de la revendication 32, comprenant en outre former de multiples faisceaux étroits dans un réseau d'antennes à grande ouverture, où lesdits faisceaux étroits couvrent une zone de diffusion désirée.

**36.** La méthode de la revendication 35, dans laquelle le nombre de faisceaux étroits est de deux à quatre.

**37.** La méthode de la revendication 35, dans laquelle la largeur des faisceaux étroits va de 2 à 3 degrés.

FIG. 1

FIG. 2

FIG. 3

FIG. 4

FIG. 5

FIG. 6

FIG. 7

Capacity Increase
Ratio

High
Angular
Spread
Multipath
Ratio/10

Number
of
Narrow
Beams

Ψ

FIG. 8

Capacity Increase
Ratio

Ratio
of High
Angular
Spread
Mobiles/10

Softer
Handoff
Ratio/10

Ψ

FIG. 9

EP 1 062 746 B1

FIG. 10

FIG. 11

FIG. 12

FIG. 13

FIG. 14

FIG. 14A

FIG. 15

FIG. 16

FIG. 16A

FIG. 17

FIG. 18

FIG. 19

FIG. 20

FIG. 21

2201

Pilot Code
Generator

2202
Traffic Code
Generator

2203
Reverse
Information
Channel

2207
Reverse
Signaling
Channel

Signaling
Code
Generator  2208

2204

2205

2206

Summing
Amplifier
2209

Summing
Amplifier
2210

2211
Baseband
Filter

2212
Baseband
Filter

I

Q

2213
Quadrature
RF Signal
Generator

2214
SUM

FIG. 22

2300

Incoming
Signal

2301
Power
Divider

2302
Quadrature
RF Signal
Generator

I

Q

2303
Baseband
Filter

2303
Baseband
Filter

2304
A/D

2304
A/D

2305
MAC &
Scale

2305
MAC &
Scale

SUM(I)

SUM(Q)

2306
Pilot Sequence
Generator
With Variable
Delay

From
Spatial
Correlator

FIG. 23

FIG. 24

FIG. 25